# EUROPEAN PATENT SPECIFICATION

(11) **EP 4 635 388 B1**
(45) Date of publication and mention of the grant of the patent: **29.04.2026**
(21) Application number: 24189483.1
(22) Date of filing: 18.07.2024
(51) Int. Cl.: A47L 11/20, A47L 11/40

(54) **MOVEMENT CONTROL METHOD FOR CLEANING ROBOT, CLEANING ROBOT, AND STORAGE MEDIUM**
BEWEGUNGSSTEUERUNGSVERFAHREN FÜR REINIGUNGSROBOTER, REINIGUNGSROBOTER UND SPEICHERMEDIUM
PROCÉDÉ DE COMMANDE DE MOUVEMENT POUR ROBOT DE NETTOYAGE, ROBOT DE NETTOYAGE ET SUPPORT D'INFORMATIONS

(30) Priority: 18.04.2024 CN 202410471694
(43) Date of publication of application: 22.10.2025
(73) Proprietor: Dreame Innovation Technology (Suzhou) Co., Ltd., Suzhou, Jiangsu 215000 (CN)
(72) Inventor: CHENG, Tangdong, Suzhou, Jiangsu, 215104 (CN); QIAN, Hongzhi, Suzhou, Jiangsu, 215104 (CN); CHENG, Yuanling, Suzhou, Jiangsu, 215104 (CN); MAO, Qi, Suzhou, Jiangsu, 215104 (CN); ZHU, Yiming, Suzhou, Jiangsu, 215104 (CN); YUAN, Jiayan, Suzhou, Jiangsu, 215104 (CN)
(74) Representative: 2K Patent Partnerschaft mbB

(56) References cited:
- CN-A- 110 989 631
- CN-A- 112 155 486
- US-A1- 2015 362 921

## Description

### TECHNICAL FIELD

This specification relates to the field of smart household technologies, and in particular, to a movement control method for a cleaning robot, a cleaning robot, and a storage medium.

### BACKGROUND

A cleaning robot is a device that can perform automatic cleaning during movement. The cleaning robot may replace manual cleaning to some extent, so that manual labor intensity is reduced, and cleaning efficiency is high.

In a movement process, the cleaning robot may encounter various types of obstacles, and therefore needs to cross the obstacles. Currently, an obstacle crossing action performed by the cleaning robot on the obstacle is relatively monotonous, and a refined and intelligent obstacle crossing requirement for a specific type of obstacle in a working environment cannot be met. As a result, obstacle crossing abnormality may be caused, for example, the cleaning robot is stuck. A movement control method for cleaning robot is already known e.g. from US-A-2015362921.

### SUMMARY

Embodiments of this specification provide a movement control method for a cleaning robot, a cleaning robot, and a storage medium, to perform refined and intelligent obstacle crossing on a step-type obstacle, so as to avoid obstacle crossing abnormality.

An embodiment of this specification provides a movement control method for a cleaning robot, where the cleaning robot is provided with a sensor system capable of obtaining three-dimensional information of an obstacle, and the method includes:
in a movement process of the cleaning robot, collecting three-dimensional information of a step-type obstacle in a front area by using the sensor system, where the three-dimensional information includes height information, depth information, width information, and slope information of the step-type obstacle, where
the step-type obstacle includes a first surface and a second surface, the height information includes height information of the first surface, the depth information includes vertical depth information of a projection of the second surface on a horizontal surface, the width information includes width information of the second surface, and the slope information includes included angle information between the second surface and the horizontal surface; and
when the height information is less than or equal to a first threshold, the vertical depth information is greater than or equal to a second threshold, the width information is greater than or equal to a third threshold, and the slope information is less than or equal to a fourth threshold, performing an obstacle crossing action to cross the step-type obstacle.

In an example embodiment, the first threshold is 5 cm to 10 cm, the second threshold is 1.1 times to 1.5 times a maximum diameter of the cleaning robot, the third threshold is 1.1 times to 1.5 times the maximum diameter of the cleaning robot, and the fourth threshold is 20° to 40°.

An embodiment of this specification further provides another movement control method for a cleaning robot, where the cleaning robot is provided with a sensor system capable of obtaining three-dimensional information of an obstacle, and the method includes:
in a movement process of the cleaning robot, collecting three-dimensional information of a step-type obstacle in a front area by using the sensor system, where the three-dimensional information includes height information, depth information, and slope information of the step-type obstacle, where
the step-type obstacle includes a first surface and a second surface, the height information includes height information of the first surface, the depth information includes vertical depth information of a projection of the second surface on a horizontal surface, and the slope information includes included angle information between the second surface and the horizontal surface; and
when the height information is less than or equal to a first threshold, the vertical depth information is greater than or equal to a second threshold, and the slope information is less than or equal to a fourth threshold, performing an obstacle crossing action to cross the step-type obstacle.

In an example embodiment, the first threshold is 5 cm to 10 cm, the second threshold is 1.1 times to 1.5 times a maximum diameter of the cleaning robot, and the fourth threshold is 20° to 40°.

An embodiment of this specification further provides another movement control method for a cleaning robot, where the cleaning robot is provided with a sensor system capable of obtaining three-dimensional information of an obstacle, and the method includes:
in a movement process of the cleaning robot, collecting three-dimensional information of a step-type obstacle in a front area by using the sensor system, where the three-dimensional information includes height information, depth information, and width information of the step-type obstacle, where
the step-type obstacle includes a first surface and a second surface, the height information includes height information of the first surface, the depth information includes vertical depth information of a projection of the second surface on a horizontal surface, and the width information includes width information of the second surface; and
when the height information is less than or equal to a first threshold, the vertical depth information is greater than or equal to a second threshold, and the width information is greater than or equal to a third threshold, performing an obstacle crossing action to cross the step-type obstacle.

In an example embodiment, the first threshold is 5 cm to 10 cm, the second threshold is 1.1 times to 1.5 times a maximum diameter of the cleaning robot, and the third threshold is 1.1 times to 1.5 times the maximum diameter of the cleaning robot.

An embodiment of this specification further provides another movement control method for a cleaning robot, where the cleaning robot is provided with a sensor system capable of obtaining three-dimensional information of an obstacle, and the method includes:
in a movement process of the cleaning robot, collecting three-dimensional information of a step-type obstacle in a front area by using the sensor system, where the three-dimensional information includes height information and depth information of the step-type obstacle, where
the step-type obstacle includes a first surface and a second surface, the height information includes height information of the first surface, and the depth information includes vertical depth information of a projection of the second surface on a horizontal surface; and
when the height information is less than or equal to a first threshold, and the vertical depth information is greater than or equal to a second threshold, performing an obstacle crossing action to cross the step-type obstacle.

In an example embodiment, the first threshold is 5 cm to 10 cm, and the second threshold is 1.1 times to 1.5 times a maximum diameter of the cleaning robot.

An embodiment of this specification further provides another movement control method for a cleaning robot, where the cleaning robot is provided with a sensor system capable of obtaining three-dimensional information of an obstacle, and the method includes:
in a movement process of the cleaning robot, collecting three-dimensional information of a step-type obstacle in a front area by using the sensor system, where the three-dimensional information includes at least height information and depth information of the step-type obstacle; and
at least when the height information and the depth information meet an obstacle crossing condition, performing an obstacle crossing action to cross the step-type obstacle, to clean the step-type obstacle.

In an example embodiment, the three-dimensional information further includes at least one of the following: width information of the step-type obstacle and slope information of the step-type obstacle, and the step of performing an obstacle crossing action includes:
when the height information, the depth information, and the width information meet the obstacle crossing condition, performing the obstacle crossing action; or
when the height information, the depth information, and the slope information meet the obstacle crossing condition, performing the obstacle crossing action; or
when the height information, the depth information, the width information, and the slope information meet the obstacle crossing condition, performing the obstacle crossing action.

In an example embodiment, the sensor system includes at least one of the following: a monocular sensor, a binocular sensor, a line laser sensor, a surface laser sensor, an LDS sensor, and a Dtof sensor.

In an example embodiment, the step of performing an obstacle crossing action includes:
when the height information is less than or equal to a first threshold, adjusting a movement direction of the cleaning robot, so that an included angle between a detection direction of the sensor system and a first surface of the step-type obstacle meets a preset included angle condition; and
when the depth information is greater than or equal to a second threshold if the preset included angle condition is met, performing the obstacle crossing action.

In an example embodiment, the step of performing an obstacle crossing action includes:
starting an obstacle crossing component to perform the obstacle crossing action by using the obstacle crossing component; or
controlling the cleaning robot to accelerate to cross the step-type obstacle.

In an example embodiment, the step of starting an obstacle crossing component includes:
when the height information is greater than a specified height and is less than or equal to a first threshold, controlling the cleaning robot to stop when moving to a specified position, where a distance between the specified position and the step-type obstacle is less than or equal to a fifth threshold; and
starting the obstacle crossing component to perform the obstacle crossing action by using the obstacle crossing component.

In an example embodiment, the step of controlling the cleaning robot to accelerate includes:
when the height information is less than or equal to a specified height, if a distance between the cleaning robot and the step-type obstacle is less than a sixth threshold, controlling the cleaning robot to retreat until the distance between the cleaning robot and the step-type obstacle is greater than or equal to the sixth threshold, where the specified height is less than a first threshold; and
controlling the cleaning robot to accelerate to cross the step-type obstacle.

In an example embodiment, when the height information and/or the depth information do or does not meet the obstacle crossing condition, an obstacle avoidance action is performed, and an edge of the step-type obstacle is cleaned.

In an example embodiment, the three-dimensional information further includes at least one of the following: the width information of the step-type obstacle and the slope information of the step-type obstacle; and when the height information and the depth information meet the obstacle crossing condition, and at least one of the width information and the slope information does not meet the obstacle crossing condition, the obstacle avoidance action is performed to clean the edge of the step-type obstacle

In an example embodiment, the step of performing an obstacle avoidance action includes:
controlling the cleaning robot to decelerate to move to the edge of the step-type obstacle; and
adjusting a movement direction of the cleaning robot to clean the edge of the step-type obstacle.

An embodiment of this specification further provides another movement control method for a cleaning robot, where the cleaning robot is provided with a sensor system capable of obtaining three-dimensional information of an obstacle, and the method includes:
in a movement process of the cleaning robot, collecting three-dimensional information of a step-type obstacle in a front area by using the sensor system, where the three-dimensional information includes at least depth information of the step-type obstacle; and
when the depth information does not meet an obstacle crossing condition, performing an obstacle avoidance action to clean an edge of the step-type obstacle.

In an example embodiment, the three-dimensional information further includes at least one of the following: height information of the step-type obstacle, width information of the step-type obstacle, and slope information of the step-type obstacle; and the step of performing an obstacle avoidance action includes:
when the depth information meets the obstacle crossing condition, and at least one of the height information, the width information, and the slope information does not meet the obstacle crossing condition, performing the obstacle avoidance action to clean the edge of the step-type obstacle.

In an example embodiment, the step of performing an obstacle avoidance action includes: controlling the cleaning robot to decelerate to move to the edge of the step-type obstacle, and adjusting a movement direction of the cleaning robot to clean the edge of the step-type obstacle.

An embodiment of this specification further provides a cleaning robot, including a body and a sensor system disposed on the body, where
the sensor system is configured to: in a movement process of the cleaning robot, collect three-dimensional information of a step-type obstacle in a front area, where the three-dimensional information includes at least height information and depth information of the step-type obstacle; and at least when the height information and the depth information meet an obstacle crossing condition, the cleaning robot performs an obstacle crossing action to cross the step-type obstacle, to clean the step-type obstacle.

An embodiment of this specification further provides a cleaning robot, including a body and a sensor system disposed on the body, where
the sensor system is configured to: in a movement process of the cleaning robot, collect three-dimensional information of a step-type obstacle in a front area, where the three-dimensional information includes at least depth information of the step-type obstacle; and when the depth information does not meet an obstacle crossing condition, the cleaning robot performs an obstacle avoidance action, and cleans an edge of the step-type obstacle.

An embodiment of this specification further provides a computer-readable storage medium, where the computer-readable storage medium stores a computer program, and when the computer program is executed by a processor, the foregoing movement control method is implemented.

An embodiment of this specification further provides a computer program product, where the computer program product includes a computer program, and when the computer program is executed by a processor, the foregoing movement control method is implemented.

According to the movement control method for a cleaning robot, the cleaning robot, and the storage medium in the embodiments of this specification, the cleaning robot is provided with the sensor system capable of obtaining the three-dimensional information of the obstacle. In the movement process of the cleaning robot, the three-dimensional information of the step-type obstacle in the front area may be collected by using the sensor system, where the three-dimensional information includes at least the height information and the depth information of the step-type obstacle; and when the height information and the depth information meet the obstacle crossing condition, the obstacle crossing action may be performed to cross the step-type obstacle, to clean the step-type obstacle. In this way, a specific type of the obstacle may be identified by using the sensor system, and refined obstacle crossing may be performed on the step-type obstacle. Both the height information and the depth information of the step-type obstacle are considered during obstacle crossing, so that a real situation of the step-type obstacle can be considered comprehensively. Therefore, refined and intelligent obstacle crossing can be performed on the step-type obstacle, thereby avoiding obstacle crossing abnormality. For example, a problem such as falling or being suspended occurs after obstacle crossing.

### BRIEF DESCRIPTION OF DRAWINGS

To describe technical solutions in embodiments of this specification or in the conventional technology more clearly, the following briefly describes the accompanying drawings required for describing the embodiments or the conventional technology. The accompanying drawings in the following description merely show some embodiments described in this specification, and a person of ordinary skill in the art can still derive other accompanying drawings from these accompanying drawings without creative efforts.
FIG. 1 is a schematic structural diagram of a cleaning robot according to an embodiment of this specification;
FIG. 2 is a schematic flowchart of a movement control method according to an embodiment of this specification;
FIG. 3 is a side view of a step-type obstacle according to an embodiment of this specification;
FIG. 4 is a front view of a step-type obstacle according to an embodiment of this specification;
FIG. 5 is a schematic flowchart of a movement control method according to an embodiment of this specification;
FIG. 6 is a schematic flowchart of a movement control method according to an embodiment of this specification;
FIG. 7 is a schematic flowchart of a movement control method according to an embodiment of this specification;
FIG. 8 is a schematic flowchart of a movement control method according to an embodiment of this specification; and
FIG. 9 is a schematic flowchart of a movement control method according to an embodiment of this specification.

### DESCRIPTION OF EMBODIMENTS

The following clearly and comprehensively describes technical solutions in embodiments of this specification with reference to the accompanying drawings in the embodiments of this specification. Clearly, the described embodiments are merely some rather than all of the embodiments of this specification. The specific embodiments described herein are merely used to explain the present disclosure, but are not intended to limit the present disclosure. All other embodiments obtained by a person of ordinary skill in the art based on the described embodiments of the present disclosure shall fall within the protection scope of the present disclosure. In addition, relationship terms such as "first" and "second" are only used to distinguish one entity or operation from another entity or operation, and do not necessarily require or imply that any actual relationship or sequence exists between these entities or operations. In addition, terms such as "greater than equal to" may be understood as "greater than or equal to". Terms such as "less than equal to" may be understood as "less than or equal to".

Embodiments of this specification provide a cleaning robot.

The cleaning robot may be an autonomous robot that can autonomously move in a working area and autonomously complete a cleaning task without external human information input and control. The working area may include an indoor area and an outdoor area. The indoor area may include a household room, an office, a shopping mall, a factory workshop, and the like. The outdoor area includes a lawn, a garden, a road, and the like. The cleaning task may include sweeping (for example, floor scrubbing, mopping, and floor sweeping), lawn mowing, snow removal, and the like.

The cleaning robot includes but is not limited to a robotic vacuum cleaner, a floor scrubbing robot, a robot integrating floor sweeping and mopping, a lawn mowing robot, a snow removal robot, and the like. The cleaning robot may perform cleaning in a manner of floor sweeping in the front and mopping at the rear or in a manner of separate floor sweeping and mopping. The manner of floor sweeping in the front and mopping at the rear may be performing floor sweeping and mopping at the same time, so that cleaning efficiency can be improved. The manner of separate floor sweeping and mopping may be performing floor sweeping first, and then performing mopping after floor sweeping is completed, so that a cleaning effect can be improved.

In the conventional technology, for different types of obstacles, the cleaning robot usually performs obstacle crossing by using a uniform obstacle crossing policy. For example, for a step-type obstacle, the cleaning robot usually performs obstacle crossing by using an obstacle crossing policy that is the same as or similar to that used for another obstacle such as a carpet. The inventor finds, through research, that the cleaning robot in the conventional technology does not have a capability of identifying a type of an obstacle, and cannot identify a specific type of an obstacle. As a result, for a step-type obstacle, the cleaning robot performs obstacle crossing by using an obstacle crossing policy that is the same as or similar to that used for another obstacle such as a carpet. Because refined and intelligent obstacle crossing cannot be performed on the step-type obstacle, obstacle crossing abnormality may occur on the cleaning robot, for example, a problem such as falling, being suspended, or being stuck after obstacle crossing.

In a past household cleaning environment, a house type and layout in a height space of a room are usually simple and monotonous, and a doorsill-type obstacle usually exists in a scenario in which the cleaning robot needs to actively cross an obstacle. The cleaning robot only needs to cross this type of obstacle, and does not walk on the doorsill-type obstacle. A reason is that implementation personnel only need to consider whether a height of the obstacle can be crossed. However, the applicant finds that with continuous improvement of quality of modern household, house types are more diversified and more complex. For example, a duplex house type, a loft house type, a split-level house type, and a recessed platform house type occur. As a result, a height difference exist between different areas, and some areas further need to be connected by using steps with different quantities, different heights, different widths, and different slopes. In addition, to make full and proper use of the space, storage spaces in the house are also stacked in a height direction. Some of the storage spaces are also connected to the floor by using steps. All these factors lead to various steps with different shapes and sizes in a modern household environment, especially steps with different vertical widths and slopes. In such a complex cleaning environment with a large height difference, only an existing obstacle crossing solution for a doorsill-type obstacle is used, and only a height of an obstacle is considered for obstacle crossing. Consequently, an abnormal case in which the robot falls or is suspended during obstacle crossing due to an insufficient vertical width is easy to occur, and an abnormal case in which the robot slips or falls during obstacle crossing due to an excessively high slope is also easy to occur. These abnormal cases increase a probability of damage to the robot, affect normal working efficiency of the robot, and reduce user experience.

Therefore, a cleaning robot provided in the embodiments of this specification may include a body, a controller, one or more cleaning components, a sensor system including one or more sensors, and the like. The body may be in a circular shape, in a square shape, or in another shape. The controller may include a micro control unit (Microcontroller Unit, MCU). Certainly, the controller may alternatively include another component that can have a control function. The cleaning component may include a side brush, a roller brush (also referred to as a floor brush), a mop plate, and the like. The side brush can gather foreign objects, so that the foreign objects move toward the center of the bottom of the cleaning robot. The roller brush is disposed in a roller brush cavity at the bottom of the body of the cleaning robot. The roller brush cavity communicates with a vacuum channel of the cleaning robot. The roller brush can sweep up a foreign object at the bottom of the cleaning robot, so that the foreign object enters a dust collection box through a vacuum nozzle. The mop plate is used to wipe or mop the floor. The mop plate is provided with a cloth. The cleaning robot is provided with a water tank. Water in the water tank flows to the cloth through a hole to wet the cloth. The dampened cloth is used to mop the floor. The foreign object cleaned by the cleaning robot includes but is not limited to dust, hair, pet feces, and the like. The controller is configured to control the cleaning robot, for example, control movement of the cleaning robot.

In an example embodiment, the cleaning robot may include one or more side brushes. For example, the cleaning robot may include two side brushes. The one or more side brushes may be the same or different. For example, the one or more side brushes may have same or different shapes. The one or more side brushes may be disposed in such a manner that all the side brushes can swing. Alternatively, the one or more side brushes may be disposed in such a manner that all the side brushes are fixed. Alternatively, the plurality of side brushes may be disposed in such a manner that one part of side brushes can swing, and the other part of side brushes are fixed. The swinging may include swinging toward the outside of the cleaning robot and/or retracting toward the inside of the cleaning robot. In this way, in an edge cleaning process, the side brush can be controlled to swing toward the outside of the cleaning robot, so as to provide a higher coverage rate and reduce a missed cleaning range. In addition, considering that the side brush that swings toward the outside increases a risk that the cleaning robot is stuck or is in contact with an obstacle (being contaminated by the obstacle or contaminating the obstacle), the side brush may further be controlled to retract toward the inside of the cleaning robot. The side brush may have an inward retraction state and an outward swing state. The outward swing state may be a state in which at least a part of the side brush swings toward the outside of the cleaning robot. The inward retraction state may be a state in which at least a part of the side brush retracts toward the inside of the cleaning robot. A part of the side brush located outside a peripheral side of the body in the outward swing state is greater than a part of the side brush located outside the peripheral side of the body in the inward retraction state. Specifically, in the outward swing state, at least a part of the side brush exceeds a maximum width position of a body edge, or the side brush may exceed a body edge of the cleaning robot, but does not exceed a maximum width position of the body edge. In the inward retraction state, the side brush does not exceed a body edge of the cleaning robot, or the side brush may exceed a body edge of the cleaning robot, but does not exceed a maximum width position of the body edge.

In an example embodiment, the mop plate may include one or more first mop plates. For example, the mop plate may include two first mop plates. The one or more first mop plates may be the same or different. For example, the one or more first mop plates may have same or different diameters. The one or more first mop plates may be disposed in such a manner that all the first mop plates can swing. Alternatively, the one or more first mop plates may be disposed in such a manner that all the first mop plates are fixed. Alternatively, the plurality of first mop plates may be disposed in such a manner that one part of first mop plates can swing, and the other part of first mop plates are fixed. The swinging may include swinging toward the outside of the cleaning robot and/or retracting toward the inside of the cleaning robot. In this way, in an edge cleaning process, the first mop plate can be controlled to swing toward the outside of the cleaning robot, so as to provide a higher coverage rate and reduce a missed cleaning range. In addition, considering that the first mop plate that swings toward the outside increases a risk that the cleaning robot is stuck or is in contact with an obstacle (being contaminated by the obstacle or contaminating the obstacle), the first mop plate may further be controlled to retract toward the inside of the cleaning robot. The first mop plate may have an inward retraction state and an outward swing state. The outward swing state may be a state in which at least a part of the first mop plate swings toward the outside of the cleaning robot. The inward retraction state may be a state in which at least a part of the first mop plate retracts toward the inside of the cleaning robot. A part of the first mop plate located outside a peripheral side of the body in the outward swing state is greater than a part of the first mop plate located outside the peripheral side of the body in the inward retraction state. Specifically, in the outward swing state, at least a part of the first mop plate exceeds a maximum width position of a body edge, or the first mop plate may exceed a body edge of the cleaning robot, but does not exceed a maximum width position of the body edge. In the inward retraction state, the first mop plate does not exceed a body edge of the cleaning robot, or the first mop plate may exceed a body edge of the cleaning robot, but does not exceed a maximum width position of the body edge.

The mop plate may further include one or more second mop plates. For example, the mop plate may further include two second mop plates. The one or more second mop plates may be the same or different. For example, the one or more second mop plates may have same or different diameters. The one or more second mop plates may be disposed in such a manner that all the second mop plates can swing. Alternatively, the one or more second mop plates may be disposed in such a manner that all the second mop plates are fixed. Alternatively, the plurality of second mop plates may be disposed in such a manner that one part of second mop plates can swing, and the other part of second mop plates are fixed. The swinging may include swinging toward the outside of the cleaning robot and/or retracting toward the inside of the cleaning robot. In this way, in an edge cleaning process, the second mop plate can be controlled to swing toward the outside of the cleaning robot, so as to provide a higher coverage rate and reduce a missed cleaning range. In addition, considering that the second mop plate that swings toward the outside increases a risk that the cleaning robot is stuck or is in contact with an obstacle (being contaminated by the obstacle or contaminating the obstacle), the second mop plate may further be controlled to retract toward the inside of the cleaning robot. The second mop plate may have an inward retraction state and an outward swing state. The outward swing state may be a state in which at least a part of the second mop plate swings toward the outside of the cleaning robot. The inward retraction state may be a state in which at least a part of the second mop plate retracts toward the inside of the cleaning robot. A part of the second mop plate located outside a peripheral side of the body in the outward swing state is greater than a part of the second mop plate located outside the peripheral side of the body in the inward retraction state. Specifically, in the outward swing state, at least a part of the second mop plate exceeds a maximum width position of a body edge, or the second mop plate may exceed a body edge of the cleaning robot, but does not exceed a maximum width position of the body edge. In the inward retraction state, the second mop plate does not exceed a body edge of the cleaning robot, or the second mop plate may exceed a body edge of the cleaning robot, but does not exceed a maximum width position of the body edge.

A diameter of the second mop plate is less than a diameter of the first mop plate. The second mop plate may protrude from a body contour of the cleaning robot. For example, the second mop plate may be fixed, and the fixed second mop plate may protrude from the body contour of the cleaning robot. For another example, the second mop plate can swing, to have the inward retraction state and the outward swing state. In the inward retraction state and/or the outward swing state, the second mop plate may protrude from the body contour of the cleaning robot. The second mop plate is disposed, so that the first mop plate does not need to swing, thereby providing a higher coverage rate, and reducing a missed cleaning range. Therefore, manufacturing costs of the cleaning robot are also reduced while a higher coverage rate is provided.

For example, optionally, the mop plate may include one or two first mop plates and one or two second mop plates. The one or two first mop plates may be disposed in such a manner that all the first mop plates are fixed. The one or two second mop plates may also be disposed in such a manner that all the second mop plates are fixed. The one or two second mop plates are used to provide higher cleaning efficiency and reduce a missed cleaning range in an edge cleaning process. In this way, because both the first mop plate and the second mop plate are fixed and do not need to swing, manufacturing costs of the cleaning robot are also reduced while a higher coverage rate is provided, and reliability of the cleaning robot is further improved.

It should be noted that a center point may be selected on the body. For example, the body of the cleaning robot may be in a shape of a circle. In this case, the center point may include the center of the circle. For another example, the body of the cleaning robot may be in a shape of a square. In this case, the center point may include a center point of the square. For another example, the cleaning robot may include two drive wheels. In this case, the center point may include a center point of a line connecting the two drive wheels. For example, the center point may be a center point of a line connecting rotation centers of the two drive wheels. In this case, the maximum width position of the body edge may include a position at which the body edge is farthest from the center point in a width direction of the body. In addition, a distance between the body and an obstacle includes a minimum distance between the center point and the obstacle.

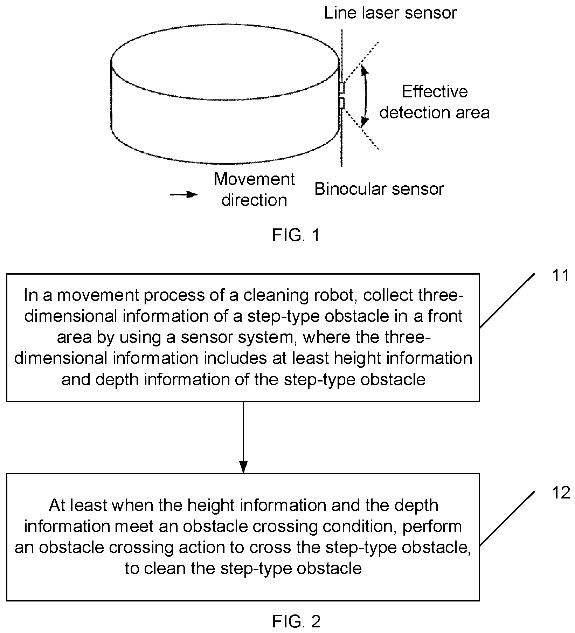

In an example embodiment, reference is made to FIG. 1. The sensor system may include a monocular sensor, a binocular sensor, a line laser sensor, a surface laser sensor, an LDS sensor (Laser Distance Sensor, laser distance sensor), a Dtof sensor (Direct Time-of-Flight Sensor, direct time-of-flight sensor), an Itof sensor (Indirect Time-of-Flight Sensor, indirect time-of-flight sensor), and any combination thereof. The monocular sensor may include a monocular vision sensor, such as a monocular camera. The binocular sensor may include a binocular vision sensor, such as a binocular camera.

The sensor system is configured to obtain three-dimensional information of an obstacle. The three-dimensional information is used to represent information of the obstacle in a three-dimensional space, including but not limited to a three-dimensional distance, a three-dimensional size, a three-dimensional form, and the like. With the three-dimensional information, the cleaning robot can accurately and comprehensively perceive the obstacle, thereby helping the cleaning robot perform more refined and intelligent obstacle crossing based on a specific type of the obstacle, so as to avoid obstacle crossing abnormality. With the three-dimensional information, cleaning efficiency is improved, and more possibilities are also provided for a future cleaning robot. The three-dimensional distance may include a distance between any part of the obstacle in the three-dimensional space and any part of the cleaning robot. The part of the cleaning robot may include the body, the roller brush, the side brush, the mop plate, and the like of the cleaning robot. The three-dimensional size may include height information, width information, depth information, and the like of the obstacle in the three-dimensional space. The three-dimensional form may include contour information of the obstacle in the three-dimensional space. The three-dimensional form may be used to determine a specific type of the obstacle, and may be further used to determine a posture and the like of the obstacle.

The sensor system may be mounted at a specific position of the cleaning robot. The specific position is used to provide a wide field of view for the sensor system to help capture sufficient surrounding environment information. For example, the specific position may include a charging port position of the cleaning robot and the front of the body of the cleaning robot. Certainly, the specific position may be another position of the cleaning robot.

In a movement process of the cleaning robot, the sensor system may collect surrounding environment information, and may send the collected information to a controller. The controller may determine the three-dimensional information of the obstacle based on the received information. Alternatively, the controller may send the received information to a background server. The server may determine the three-dimensional information of the obstacle based on the received information, and may send the three-dimensional information of the obstacle to the controller. The server may be a background-oriented device, and may be specifically one server, a distributed server cluster that includes a plurality of servers, or the like. The controller may send, in a wireless communication manner such as Bluetooth (Bluetooth), infrared (IrDA), wireless fidelity (WI-FI), ultra-wide band (Ultra Wide Band), Zigbee (Zigbee), and near field communication (Near Field Communication, NFC), the information collected by the sensor system. The collected information includes but is not limited to image data, contour data, point cloud data, and the like of an object.

The following describes in detail specific implementation of the sensor system in the embodiments of this specification by using several examples.

In an example embodiment, the sensor system may include a binocular sensor. Three-dimensional information of an object may be obtained by using the binocular sensor. The binocular sensor may be mounted at a specific position of the cleaning robot. The specific position is used to provide a wide field of view for the binocular sensor to help capture sufficient surrounding environment information. For example, the specific position may include a charging port position of the cleaning robot and the front of the body of the cleaning robot. Based on the binocular sensor, structural complexity of the cleaning robot can be reduced, and costs can be reduced. An internal space of the cleaning robot can also be saved. Therefore, the saved space can be used to place a larger dust box to improve a cleaning capability, or can be used to place a larger battery to improve a battery life. The binocular sensor captures image data of a same scene from two different perspectives by using a plurality of (for example, two) cameras. The three-dimensional information of the object may be determined based on a difference between the two pieces of image data. Therefore, high-precision three-dimensional scanning is implemented on a surrounding environment of the cleaning robot, and high-resolution perception is implemented on the surrounding environment, for example, perception of an object as small as 5 mm in size.

The binocular sensor includes a binocular camera. In an aspect, the cleaning robot may obtain, by using the camera, image information of a wavelength band such as visible light and/or infrared light of an object in an environment in which the cleaning robot is located, to identify a type and a boundary range of the object. In another aspect, a three-dimensional shape and a distance of the object may be obtained through calculation by using parallax of two cameras. Therefore, obstacle avoidance may be performed based on information such as the type, the boundary range, the three-dimensional shape, and the distance of the obstacle, and functions such as dirt detection, cleaned-surface material detection, doorsill and step detection, room and furniture identification, and human or pet identification are implemented.

The binocular sensor collects parallax images of a same scene from two different perspectives. Matched pixels in the two parallax images may be obtained by using a binocular matching algorithm (for example, SAD, SIFT, ORB, or BM). The three-dimensional information of the object may be obtained by using a triangulation algorithm and based on the matched pixels in combination with a baseline (a physical distance between the two cameras) and a focal length of the binocular sensor. Certainly, the three-dimensional information of the object may be obtained based on the two parallax images and by using a trained deep learning model. The deep learning model may include a convolutional neural network or the like.

Specifically, the controller may determine the three-dimensional information of the object based on a difference between the two pieces of image data. Alternatively, the background-oriented server may determine the three-dimensional information of the object based on a difference between the two pieces of image data.

In another example embodiment, the sensor system may further include a monocular camera and a structured light sensor (for example, a line laser sensor or a cross light sensor) that are disposed at the front of the cleaning robot. In this way, the cleaning robot may obtain, by using the monocular camera, image information of a wavelength band such as visible light and/or infrared light of an object in an environment in which the cleaning robot is located, to identify a type and a boundary range of the object, and may further detect a three-dimensional shape and a distance of the object by using the structured light sensor in combination with motion scanning of the robot or in combination with rotation or movement of the LDS sensor. Therefore, obstacle avoidance is implemented based on information such as the type, the boundary range, the three-dimensional shape, and the distance of the obstacle, and functions such as dirt detection, cleaned-surface material detection, doorsill and step detection, room and furniture identification, and human or pet identification are implemented.

In another example embodiment, the sensor system may include any plurality of a monocular sensor, a line laser sensor, an LDS sensor, and a Dtof sensor. The three-dimensional information of the object can also be obtained by using a combination of any plurality of sensors. In this way, power consumption of the cleaning robot can be reduced compared with the binocular sensor. The plurality of sensors may be mounted at a specific position of the cleaning robot. The specific position is used to provide a wide field of view for the sensor to help capture sufficient surrounding environment information. For example, the specific position may include a charging port position of the cleaning robot and the front of the body of the cleaning robot. A combination manner of the plurality of sensors may be as follows:

For example, the sensor system may include a monocular sensor and a line laser sensor. The line laser sensor is a distance sensor based on a line laser technology, and implements ranging by emitting a thin line-shaped laser beam and receiving a reflected laser beam and by using a scattering principle of the laser beam. Because only an obstacle on a laser line of the sensor can be sensed, at least two line laser sensors may be symmetrically disposed at the front of the cleaning robot, and a monocular sensor may be disposed between the at least two line laser sensors. The monocular sensor may collect image data of an object. Depth information may be added to the image data by registering data collected by the monocular sensor with data collected by the line laser sensor, so that the three-dimensional information of the object can be obtained.

For another example, the sensor system may include a monocular sensor and an LDS sensor. The monocular sensor may collect image data of an object. The image data is used to identify feature data such as a shape, a texture, and a color of the object. The LDS sensor may collect point cloud data of an object. When the two sensors are used in combination, the image data collected by the monocular sensor may be fused with the point cloud data collected by the LDS sensor. The image data is used to assist in parsing an object in point cloud to obtain the three-dimensional information of the object.

Certainly, the sensor system may include two or more other sensors in the monocular sensor, the line laser sensor, the LDS sensor, and the Dtof sensor. The three-dimensional information of the object may be obtained by using a combination of the two or more sensors. Examples are not listed one by one in the embodiments of this specification.

Reference is made to FIG. 2, FIG. 3, and FIG. 4 together. An embodiment of this specification further provides a movement control method for a cleaning robot. The method includes the following steps.

Step 11: In a movement process of the cleaning robot, collect three-dimensional information of a step-type obstacle in a front area by using a sensor system, where the three-dimensional information includes at least height information and depth information of the step-type obstacle.

In an example embodiment, the cleaning robot may clean a working area in a bow-shaped manner. In a bow-shaped cleaning process, the cleaning robot may collect the three-dimensional information of the obstacle in the front area by using the sensor system. Alternatively, in an edge cleaning process, the cleaning robot may collect the three-dimensional information of the obstacle in the front area by using the sensor system. Alternatively, in a process of returning to a base station, the cleaning robot may collect the three-dimensional information of the obstacle in the front area by using the sensor system. The base station is configured to disassemble and/or mount a cleaning component on the cleaning robot, may also charge the cleaning robot, and may also clean debris in a dust collection box of the cleaning robot.

In an example embodiment, the front area may include an effective detection area of the sensor system. The effective detection area may include at least one of the following: an effective field of view range of a monocular vision sensor, an effective field of view range of a binocular vision sensor, an effective distance detection range of a line laser sensor, an effective distance detection range of a surface laser sensor, an effective distance detection range of an LDS sensor, and an effective distance detection range of a Dtof sensor.

In an example embodiment, the step-type obstacle is a building member used to connect different surfaces. Surfaces connected by the step-type obstacle may have different elevations, or may have a same elevation. Surfaces connected by the step-type obstacle may be flat or curved. For example, the step-type obstacle may include a stair step, a ramp step, a step between different indoor areas, and the like. The step between different indoor areas may include a step between a balcony and a living room, a step between a bedroom and a living room, a step between a kitchen and a living room, and the like.

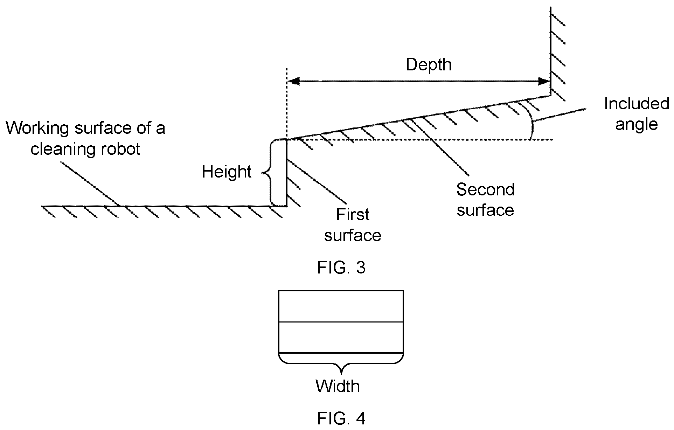

Reference is made to FIG. 3 and FIG. 4 together. The step-type obstacle may include a first surface and a second surface. The first surface is a facade of the step-type obstacle. The first surface respectively intersects a working surface and the second surface of the cleaning robot. The second surface is a tread of the step-type obstacle. The second surface and the working surface have different elevations. The second surface and a horizontal surface may be parallel, or there may be an included angle between the second surface and a horizontal surface. The included angle may be 1°, 5°, 10°, 20°, 30°, 40°, 50°, 70°, 80°, or the like. The three-dimensional information of the step-type obstacle includes at least the height information and the depth information. The height information may include height information of the first surface, and the depth information may include vertical depth information of a projection of the second surface on the horizontal surface. Certainly, the three-dimensional information of the step-type obstacle may include other information, such as width information and/or slope information. The width information may include width information of the second surface. The slope information may include included angle information between the second surface and the horizontal surface.

In an example embodiment, in the movement process of the cleaning robot, surrounding environment information in the front area may be collected by the sensor system, and the collected information may be sent to a controller. The controller may determine a type of the obstacle based on the received information, and may obtain the three-dimensional information of the step-type obstacle when the type of the obstacle is a step-type obstacle. Alternatively, the controller may send the received information to a background server. The server may determine a type of the obstacle based on the received information, may obtain the three-dimensional information of the step-type obstacle when the type of the obstacle is a step-type obstacle, and may send the three-dimensional information of the step-type obstacle to the controller.

For example, the sensor system may include a binocular sensor. The binocular sensor captures image data of a same scene from two different perspectives by using a plurality of (for example, two) cameras. The controller or the server may input the two pieces of image data into a trained deep learning model to obtain the three-dimensional information of the step-type obstacle.

For another example, the sensor system may include a monocular sensor and a line laser sensor. The controller or the server may register data collected by the monocular sensor with data collected by the line laser sensor, and may add depth information to the image data collected by the monocular sensor, so that contour information of the obstacle can be obtained. When it is determined, based on the contour information, that the obstacle is a step-type obstacle, the three-dimensional information of the step-type obstacle may be determined.

Step 12: At least when the height information and the depth information meet an obstacle crossing condition, perform an obstacle crossing action to cross the step-type obstacle, to clean the step-type obstacle.

In an example embodiment, the obstacle crossing condition is an obstacle crossing condition of the step-type obstacle, and is used by the cleaning robot to determine whether to perform the obstacle crossing action to cross the step-type obstacle. At least when both the height information and the depth information meet the obstacle crossing condition, the cleaning robot performs the obstacle crossing action to cross the step-type obstacle. The step-type obstacle may be cleaned after obstacle crossing. Certainly, the cleaning robot may directly move after obstacle crossing, to clean another working area connected to the step-type obstacle without cleaning the step-type obstacle. At least both the height information and the depth information of the step-type obstacle are considered during obstacle crossing, so that a real situation of the step-type obstacle can be considered comprehensively. Therefore, refined and intelligent obstacle crossing can be performed on the step-type obstacle, thereby avoiding obstacle crossing abnormality. For example, a problem such as falling, being suspended, or being stuck after obstacle crossing is avoided. Specifically, for example, an abnormal problem such as falling, being suspended, or being stuck after obstacle crossing because the step-type obstacle is excessively short in a vertical depth direction can be avoided, to ensure that the cleaning robot can perform normal cleaning work.

The obstacle crossing condition includes at least: the height information is less than or equal to a first threshold, and the vertical depth information is greater than or equal to a second threshold. In this case, at least when the height information of the step-type obstacle is less than or equal to the first threshold, and the vertical depth information of the step-type obstacle is greater than or equal to the second threshold, the cleaning robot performs the obstacle crossing action to cross the step-type obstacle. The first threshold may be a maximum obstacle crossing height of the cleaning robot. The first threshold may be determined based on a height between a body and the working surface of the cleaning robot. A value range of the first threshold may be 5 cm to 10 cm. For example, the first threshold may be 5 cm, 6 cm, 7 cm, 8 cm, 9 cm, 9.5 cm, or 10 cm. The second threshold may be a minimum obstacle crossing vertical depth of the cleaning robot. The second threshold may be determined based on a size of the cleaning robot. For example, the second threshold may be determined based on a maximum diameter of the cleaning robot. A value range of the second threshold may be 1.1 times to 1.5 times the maximum diameter of the cleaning robot. For example, the second threshold may be 1.1 times, 1.2 times, 1.3 times, 1.4 times, 1.45 times, 1.5 times the maximum diameter of the cleaning robot. Specifically, for example, the second threshold may be 35 cm, 36 cm, or 40 cm.

In an example embodiment, the three-dimensional information may include only the height information and the depth information of the step-type obstacle. In this case, when both the height information and the depth information meet the obstacle crossing condition, the cleaning robot can perform the obstacle crossing action to cross the step-type obstacle. The step-type obstacle may be cleaned after obstacle crossing. Certainly, the cleaning robot may directly move after obstacle crossing, to clean another working area connected to the step-type obstacle without cleaning the step-type obstacle. Both the height information and the depth information of the step-type obstacle are considered during obstacle crossing, so that a real situation of the step-type obstacle can be considered comprehensively. Therefore, refined and intelligent obstacle crossing can be performed on the step-type obstacle, thereby avoiding obstacle crossing abnormality. For example, a problem such as falling, being suspended, or being stuck after obstacle crossing can be avoided. Specifically, for example, an abnormal problem such as falling, being suspended, or being stuck after obstacle crossing because the step-type obstacle is excessively short in a vertical depth direction can be avoided, to ensure that the cleaning robot can perform normal cleaning work. When the height information and/or the depth information do or does not meet the obstacle crossing condition, the cleaning robot may perform an obstacle avoidance action to clean an edge of the step-type obstacle. When the obstacle crossing condition is not met, edge cleaning is performed, so that a missed cleaning range can be reduced, a cleaning coverage rate can be increased, and a cleaning effect can be improved.

For example, the cleaning robot may determine whether the height information of the step-type obstacle is less than or equal to the first threshold. When the height information of the step-type obstacle is greater than the first threshold, it is considered that a height of the step-type obstacle is greater than the maximum obstacle crossing height, and the obstacle crossing action cannot be performed. The cleaning robot may perform the obstacle avoidance action, and may also clean the edge of the step-type obstacle. When the height information of the step-type obstacle is less than or equal to the first threshold, it is considered that a height of the step-type obstacle is less than the maximum obstacle crossing height, and the obstacle crossing action is possibly performed. The cleaning robot may further determine whether the vertical depth information of the step-type obstacle is greater than or equal to the second threshold. When the vertical depth information of the step-type obstacle is less than the second threshold, it is considered that abnormality such as falling or suspension may occur in the vertical depth direction after obstacle crossing, and the cleaning robot may perform the obstacle avoidance action. When the vertical depth information of the step-type obstacle is greater than or equal to the second threshold, it is considered that a vertical depth of the step-type obstacle is greater than the minimum obstacle crossing vertical depth of the step-type obstacle. After obstacle crossing, no obstacle crossing abnormality such as falling or suspension occurs in the vertical depth direction, and the cleaning robot may perform the obstacle crossing action.

Certainly, the foregoing determining process is only an example. This is not limited in actual application. For example, it may be first determined whether the vertical depth information of the step-type obstacle is greater than or equal to the second threshold, and when the vertical depth information is greater than or equal to the second threshold, it may be further determined whether the height information of the step-type obstacle is less than or equal to the first threshold.

In an example embodiment, the three-dimensional information may include the height information, the depth information, and the width information of the step-type obstacle. When the height information, the depth information, and the width information all meet the obstacle crossing condition, the cleaning robot may perform the obstacle crossing action to cross the step-type obstacle. The step-type obstacle may be cleaned after obstacle crossing. Certainly, the cleaning robot may directly move after obstacle crossing, to clean another working area connected to the step-type obstacle without cleaning the step-type obstacle. The height information, the depth information, and the width information of the step-type obstacle are all considered during obstacle crossing, so that a real situation of the step-type obstacle can be considered comprehensively. Therefore, more refined and intelligent obstacle crossing can be performed on the step-type obstacle, thereby avoiding obstacle crossing abnormality. For example, a problem such as falling, being suspended, or being stuck after obstacle crossing can be avoided, to ensure that the cleaning robot can perform normal cleaning work. Specifically, for example, an abnormal problem such as falling, being suspended, or being stuck after obstacle crossing because the step-type obstacle is excessively short in a vertical depth direction can be avoided. An abnormal problem such as falling, being suspended, or being stuck after obstacle crossing because the step-type obstacle is excessively narrow in a width direction can also be avoided. When at least one of the height information, the depth information, and the width information does not meet the obstacle crossing condition, the cleaning robot may perform an obstacle avoidance action to clean an edge of the step-type obstacle. When the obstacle crossing condition is not met, edge cleaning is performed, so that a missed cleaning range can be reduced, a cleaning coverage rate can be increased, and a cleaning effect can be improved.

The obstacle crossing condition includes at least: the height information is less than or equal to the first threshold, the vertical depth information is greater than or equal to the second threshold, and the width information is greater than or equal to a third threshold. In this case, at least when the height information of the step-type obstacle is less than or equal to the first threshold, the vertical depth information of the step-type obstacle is greater than or equal to the second threshold, and the width information of the step-type obstacle is greater than or equal to the third threshold, the cleaning robot performs the obstacle crossing action to cross the step-type obstacle. The first threshold may be a maximum obstacle crossing height of the cleaning robot. The first threshold may be determined based on a height between a body and the working surface of the cleaning robot. A value range of the first threshold may be 5 cm to 10 cm. For example, the first threshold may be 5 cm, 6 cm, 7 cm, 8 cm, 9 cm, 9.5 cm, or 10 cm. The second threshold may be a minimum obstacle crossing vertical depth of the cleaning robot. The second threshold may be determined based on a size of the cleaning robot. For example, the second threshold may be determined based on a maximum diameter of the cleaning robot. A value range of the second threshold is 1.1 times to 1.5 times the maximum diameter of the cleaning robot. For example, the second threshold may be 1.1 times, 1.2 times, 1.3 times, 1.4 times, 1.45 times, 1.5 times the maximum diameter of the cleaning robot. The third threshold may be a minimum obstacle crossing width of the cleaning robot. The third threshold may be determined based on the size of the cleaning robot. For example, the third threshold may be determined based on the maximum diameter of the cleaning robot. For example, the third threshold may alternatively be obtained based on a wheel spacing between two drive wheels of the cleaning robot. A value range of the third threshold may be 1.1 times to 1.5 times the maximum diameter or the wheel spacing of the cleaning robot. For example, the third threshold may be 1.1 times, 1.15 times, 1.2 times, 1.3 times, 1.4 times, 1.45 times, 1.5 times the maximum diameter or the wheel spacing of the cleaning robot. Preferably, the value range of the third threshold is 1.1 times to 1.5 times the maximum diameter of the cleaning robot. In this way, a problem such as falling, being suspended, or being stuck after obstacle crossing can be better avoided.

For example, the cleaning robot may determine whether the height information of the step-type obstacle is less than or equal to the first threshold. When the height information of the step-type obstacle is greater than the first threshold, it is considered that a height of the step-type obstacle is greater than the maximum obstacle crossing height, and the obstacle crossing action cannot be performed. The cleaning robot may perform the obstacle avoidance action, to clean the edge of the step-type obstacle. When the height information of the step-type obstacle is less than or equal to the first threshold, it is considered that a height of the step-type obstacle is less than the maximum obstacle crossing height, and the obstacle crossing action is possibly performed. The cleaning robot may further determine whether the vertical depth information of the step-type obstacle is greater than or equal to the second threshold. When the vertical depth information of the step-type obstacle is less than the second threshold, it is considered that obstacle crossing abnormality such as falling or suspension may occur in the vertical depth direction after obstacle crossing, and the cleaning robot may perform the obstacle avoidance action. When the vertical depth information of the step-type obstacle is greater than or equal to the second threshold, it is considered that a vertical depth of the step-type obstacle is greater than the minimum obstacle crossing vertical depth of the step-type obstacle. After obstacle crossing, no abnormality such as falling or suspension occurs in the vertical depth direction, and the obstacle crossing action is possibly performed. The cleaning robot may further determine whether the width information of the step-type obstacle is greater than or equal to the third threshold. When the width information of the step-type obstacle is less than the third threshold, it is considered that obstacle crossing abnormality such as falling or suspension may occur in the width direction after obstacle crossing, and the cleaning robot may perform the obstacle avoidance action. When the width information of the step-type obstacle is greater than or equal to the third threshold, it is considered that a width of the step-type obstacle is greater than the minimum obstacle crossing width of the step-type obstacle. After obstacle crossing, no abnormality such as falling or suspension occurs in the width direction. The cleaning robot may perform the obstacle crossing action to clean the step-type obstacle.

Certainly, the foregoing determining process is only an example. This is not limited in actual application. For example, it may be first determined whether the vertical depth information of the step-type obstacle is greater than or equal to the second threshold; when the vertical depth information is greater than or equal to the second threshold, it may be further determined whether the height information of the step-type obstacle is less than or equal to the first threshold; and when the height information is less than or equal to the first threshold, it may be further determined whether the width information of the step-type obstacle is greater than or equal to the third threshold. For another example, it may be first determined whether the width information of the step-type obstacle is greater than or equal to the third threshold; when the width information is greater than or equal to the third threshold, it may be further determined whether the vertical depth information of the step-type obstacle is greater than or equal to the second threshold; and when the vertical depth information is greater than or equal to the second threshold, it may be further determined whether the height information of the step-type obstacle is less than or equal to the first threshold.

In this embodiment, that the height information meets the obstacle crossing condition and the height information does not meet the obstacle crossing condition may be understood by using content written in the foregoing embodiment.

In an example embodiment, the three-dimensional information may include the height information, the depth information, and the slope information of the step-type obstacle. When the height information, the depth information, and the slope information all meet the obstacle crossing condition, the cleaning robot may perform the obstacle crossing action to cross the step-type obstacle. The step-type obstacle may be cleaned after obstacle crossing. Certainly, the cleaning robot may directly move after obstacle crossing, to clean another working area connected to the step-type obstacle without cleaning the step-type obstacle. The height information, the depth information, and the slope information of the step-type obstacle are all considered during obstacle crossing, so that a real situation of the step-type obstacle can be considered comprehensively. Therefore, more refined and intelligent obstacle crossing can be performed on the step-type obstacle, thereby avoiding obstacle crossing abnormality, to ensure that the cleaning robot can perform normal cleaning work. For example, a problem such as falling, being suspended, or being stuck after obstacle crossing can be avoided. Specifically, for example, an abnormal problem such as falling, being suspended, or being stuck after obstacle crossing because the step-type obstacle is excessively short in a vertical depth direction can be avoided. The following case can also be avoided: Because the included angle between the second surface of the step-type obstacle and the horizontal surface is excessively large, the second surface is excessively steep, and consequently the cleaning robot slips after obstacle crossing. When at least one of the height information, the depth information, and the slope information does not meet the obstacle crossing condition, the cleaning robot may perform an obstacle avoidance action to clean an edge of the step-type obstacle. When the obstacle crossing condition is not met, edge cleaning is performed, so that a missed cleaning range can be reduced, a cleaning coverage rate can be increased, and a cleaning effect can be improved.

The obstacle crossing condition includes at least: the height information is less than or equal to the first threshold, the vertical depth information is greater than or equal to the second threshold, and the slope information is less than or equal to a fourth threshold. In this case, at least when the height information of the step-type obstacle is less than or equal to the first threshold, the vertical depth information of the step-type obstacle is greater than or equal to the second threshold, and the slope information of the step-type obstacle is less than or equal to the fourth threshold, the cleaning robot performs the obstacle crossing action to cross the step-type obstacle. The first threshold may be a maximum obstacle crossing height of the cleaning robot. The first threshold may be determined based on a height between a body and the working surface of the cleaning robot. A value range of the first threshold may be 5 cm to 10 cm. For example, the first threshold may be 5 cm, 6 cm, 7 cm, 8 cm, 9 cm, 9.5 cm, or 10 cm. The second threshold may be a minimum obstacle crossing vertical depth of the cleaning robot. The second threshold may be determined based on a size of the cleaning robot. For example, the second threshold may be determined based on a maximum diameter of the cleaning robot. A value range of the second threshold is 1.1 times to 1.5 times the maximum diameter of the cleaning robot. For example, the second threshold may be 1.1 times, 1.2 times, 1.3 times, 1.4 times, 1.45 times, 1.5 times the maximum diameter of the cleaning robot. The fourth threshold may be a maximum obstacle crossing slope of the cleaning robot. The fourth threshold may be determined based on attribute information such as a weight of the cleaning robot and a friction coefficient of a drive wheel. A value range of the fourth threshold may be 20° to 40°. For example, the fourth threshold may be 20°, 25°, 30°, 36°, or 40°.

For example, the cleaning robot may determine whether the height information of the step-type obstacle is less than or equal to the first threshold. When the height information of the step-type obstacle is greater than the first threshold, it is considered that a height of the step-type obstacle is greater than the maximum obstacle crossing height, and the obstacle crossing action cannot be performed. The cleaning robot may perform the obstacle avoidance action, to clean the edge of the step-type obstacle. When the height information of the step-type obstacle is less than or equal to the first threshold, it is considered that a height of the step-type obstacle is less than the maximum obstacle crossing height, and the obstacle crossing action is possibly performed. The cleaning robot may further determine whether the vertical depth information of the step-type obstacle is greater than or equal to the second threshold. When the vertical depth information of the step-type obstacle is less than the second threshold, it is considered that obstacle crossing abnormality such as falling or suspension may occur in the vertical depth direction after obstacle crossing, and the cleaning robot may perform the obstacle avoidance action. When the vertical depth information of the step-type obstacle is greater than or equal to the second threshold, it is considered that a vertical depth of the step-type obstacle is greater than the minimum obstacle crossing vertical depth of the step-type obstacle. After obstacle crossing, no obstacle crossing abnormality such as falling or suspension occurs in the vertical depth direction, and the obstacle crossing action is possibly performed. The cleaning robot may further determine whether the slope information of the step-type obstacle is less than or equal to the fourth threshold. When the slope information of the step-type obstacle is greater than the fourth threshold, it is considered that the step-type obstacle is steep, and the cleaning robot cannot move normally. The cleaning robot may perform the obstacle avoidance action. When the slope information of the step-type obstacle is less than or equal to the fourth threshold, it is considered that a slope of the step-type obstacle is relatively gentle. The cleaning robot may perform the obstacle crossing action to clean the step-type obstacle.

Certainly, the foregoing determining process is only an example. This is not limited in actual application. For example, it may be first determined whether the vertical depth information of the step-type obstacle is greater than or equal to the second threshold; when the vertical depth information is greater than or equal to the second threshold, it may be further determined whether the height information of the step-type obstacle is less than or equal to the first threshold; and when the height information is less than or equal to the first threshold, it may be further determined whether the slope information of the step-type obstacle is less than or equal to the fourth threshold. For another example, it may be first determined whether the slope information of the step-type obstacle is less than or equal to the fourth threshold; when the slope information is less than or equal to the fourth threshold, it may be further determined whether the vertical depth information of the step-type obstacle is greater than or equal to the second threshold; and when the vertical depth information is greater than or equal to the second threshold, it may be further determined whether the height information of the step-type obstacle is less than or equal to the first threshold.

In this embodiment, that the height information meets the obstacle crossing condition and the height information does not meet the obstacle crossing condition may be understood by using content written in the foregoing embodiment.

In an example embodiment, the three-dimensional information may include the height information, the depth information, the width information, and the slope information of the step-type obstacle. When the height information, the depth information, the width information, and the slope information all meet the obstacle crossing condition, the cleaning robot may perform the obstacle crossing action to cross the step-type obstacle. The step-type obstacle may be cleaned after obstacle crossing. Certainly, the cleaning robot may directly move after obstacle crossing, to clean another working area connected to the step-type obstacle without cleaning the step-type obstacle. The height information, the depth information, the width information, and the slope information of the step-type obstacle are all considered during obstacle crossing, so that a real situation of the step-type obstacle can be considered comprehensively. Therefore, more refined and intelligent obstacle crossing can be performed on the step-type obstacle, thereby avoiding obstacle crossing abnormality. For example, a problem such as falling, being suspended, or being stuck after obstacle crossing can be avoided, to ensure that the cleaning robot can perform normal cleaning work. Specifically, for example, an abnormal problem such as falling, being suspended, or being stuck after obstacle crossing because the step-type obstacle is excessively short in a vertical depth direction can be avoided. An abnormal problem such as falling, being suspended, or being stuck after obstacle crossing because the step-type obstacle is excessively narrow in a width direction can also be avoided. The following case can also be avoided: Because the included angle between the second surface of the step-type obstacle and the horizontal surface is excessively large, the second surface is excessively steep, and consequently the cleaning robot slips after obstacle crossing. When at least one of the height information, the depth information, the width information, and the slope information does not meet the obstacle crossing condition, the cleaning robot may perform an obstacle avoidance action. When the obstacle crossing condition is not met, edge cleaning is performed, so that a missed cleaning range can be reduced, a cleaning coverage rate can be increased, and a cleaning effect can be improved.

The obstacle crossing condition includes at least: the height information is less than or equal to the first threshold, the vertical depth information is greater than or equal to the second threshold, the width information is greater than or equal to a third threshold, and the slope information is less than or equal to a fourth threshold. In this case, only when the height information of the step-type obstacle is less than or equal to the first threshold, the vertical depth information of the step-type obstacle is greater than or equal to the second threshold, the width information of the step-type obstacle is greater than or equal to the third threshold, and the slope information of the step-type obstacle is less than or equal to the fourth threshold, the cleaning robot performs the obstacle crossing action to cross the step-type obstacle. The first threshold may be a maximum obstacle crossing height of the cleaning robot. The first threshold may be determined based on a height between a body and the working surface of the cleaning robot. A value range of the first threshold may be 5 cm to 10 cm. For example, the first threshold may be 5 cm, 6 cm, 7 cm, 8 cm, 9 cm, 9.5 cm, or 10 cm. The second threshold may be a minimum obstacle crossing vertical depth of the cleaning robot. The second threshold may be determined based on a size of the cleaning robot. For example, the second threshold may be determined based on a maximum diameter of the cleaning robot. A value range of the second threshold is 1.1 times to 1.5 times the maximum diameter of the cleaning robot. For example, the second threshold may be 1.1 times, 1.2 times, 1.3 times, 1.4 times, 1.45 times, 1.5 times the maximum diameter of the cleaning robot. The third threshold may be a minimum obstacle crossing width of the cleaning robot. The third threshold may be determined based on the size of the cleaning robot. For example, the third threshold may be determined based on the maximum diameter of the cleaning robot. For example, the third threshold may alternatively be obtained based on a wheel spacing between two drive wheels of the cleaning robot. A value range of the third threshold may be 1.1 times to 1.5 times the maximum diameter or the wheel spacing of the cleaning robot. For example, the third threshold may be 1.1 times, 1.15 times, 1.2 times, 1.3 times, 1.4 times, 1.45 times, 1.5 times the maximum diameter or the wheel spacing of the cleaning robot. Preferably, the value range of the third threshold is 1.1 times to 1.5 times the maximum diameter of the cleaning robot. In this way, a problem such as falling, being suspended, or being stuck after obstacle crossing can be better avoided. The fourth threshold may be a maximum obstacle crossing slope of the cleaning robot. The fourth threshold may be determined based on attribute information such as a weight of the cleaning robot and a friction coefficient of a drive wheel. A value range of the fourth threshold may be 20° to 40°. For example, the fourth threshold may be 20°, 25°, 30°, 36°, or 40°.

For example, the cleaning robot may determine whether the height information of the step-type obstacle is less than or equal to the first threshold. When the height information of the step-type obstacle is greater than the first threshold, it is considered that a height of the step-type obstacle is greater than the maximum obstacle crossing height, and the obstacle crossing action cannot be performed. The cleaning robot may perform the obstacle avoidance action, and may clean the edge of the step-type obstacle. When the height information of the step-type obstacle is less than or equal to the first threshold, it is considered that a height of the step-type obstacle is less than the maximum obstacle crossing height, and the obstacle crossing action is possibly performed. The cleaning robot may further determine whether the vertical depth information of the step-type obstacle is greater than or equal to the second threshold. When the vertical depth information of the step-type obstacle is less than the second threshold, it is considered that obstacle crossing abnormality such as falling or suspension may occur in the vertical depth direction after obstacle crossing, and the cleaning robot may perform the obstacle avoidance action. When the vertical depth information of the step-type obstacle is greater than or equal to the second threshold, it is considered that a vertical depth of the step-type obstacle is greater than the minimum obstacle crossing vertical depth of the step-type obstacle. After obstacle crossing, no obstacle crossing abnormality such as falling or suspension occurs in the vertical depth direction, and the obstacle crossing action is possibly performed. The cleaning robot may further determine whether the width information of the step-type obstacle is greater than or equal to the third threshold. When the width information of the step-type obstacle is less than the third threshold, it is considered that obstacle crossing abnormality such as falling or suspension may occur in the width direction after obstacle crossing, and the cleaning robot may perform the obstacle avoidance action. When the width information of the step-type obstacle is greater than or equal to the third threshold, it is considered that a width of the step-type obstacle is greater than the minimum obstacle crossing width of the step-type obstacle. After obstacle crossing, no obstacle crossing abnormality such as falling or suspension occurs in the width direction, and the obstacle crossing action is possibly performed. The cleaning robot may further determine whether the slope information of the step-type obstacle is less than or equal to the fourth threshold. When the slope information of the step-type obstacle is greater than the fourth threshold, it is considered that a slope of the step-type obstacle is relatively steep. The cleaning robot may perform the obstacle avoidance action. When the slope information of the step-type obstacle is less than or equal to the fourth threshold, it is considered that a slope of the step-type obstacle is relatively gentle. The cleaning robot may perform the obstacle crossing action.

Certainly, the foregoing determining process is only an example. This is not limited in actual application. For example, it may be first determined whether the vertical depth information of the step-type obstacle is greater than or equal to the second threshold; when the vertical depth information is greater than or equal to the second threshold, it may be further determined whether the height information of the step-type obstacle is less than or equal to the first threshold; when the height information is less than or equal to the first threshold, it may be further determined whether the slope information of the step-type obstacle is less than or equal to the fourth threshold; and when the slope information is less than or equal to the fourth threshold, it may be further determined whether the width information of the step-type obstacle is greater than or equal to the third threshold. For another example, it may be first determined whether the slope information of the step-type obstacle is less than or equal to the fourth threshold; when the slope information is less than or equal to the fourth threshold, it may be further determined whether the width information of the step-type obstacle is greater than or equal to the third threshold; when the width information is greater than or equal to the third threshold, it may be further determined whether the vertical depth information of the step-type obstacle is greater than or equal to the second threshold; and when the vertical depth information is greater than or equal to the second threshold, it may be further determined whether the height information of the step-type obstacle is less than or equal to the first threshold.

In this embodiment, that the height information meets the obstacle crossing condition and the height information does not meet the obstacle crossing condition may be understood by using content written in the foregoing embodiment.

It should be noted that, in the foregoing one or more example embodiments, when the height information of the step-type obstacle is less than or equal to the first threshold, a movement direction of the cleaning robot may be further adjusted, so that an included angle between a detection direction of the sensor system and the first surface of the step-type obstacle meets a preset included angle condition. The preset included angle condition is used to reduce a deviation between the sensor system and the first surface of the step-type obstacle, so that other three-dimensional information such as the depth information, the width information, and the slope information of the obstacle can be accurately obtained. Optionally, the preset included angle condition may be 85° to 95°. Therefore, the sensor system can directly face the first surface of the step-type obstacle, so that the sensor system can accurately obtain other three-dimensional information such as the depth information, the width information, and the slope information of the obstacle. When the included angle between the detection direction of the sensor system and the first surface of the step-type obstacle meets the preset included angle condition, the three-dimensional information of the step-type obstacle in the front area may be re-collected by using the sensor system, for example, at least one of the depth information, the width information, and the slope information. For example, if the re-collected three-dimensional information includes the depth information of the step-type obstacle, the obstacle crossing action may be performed when the depth information is greater than or equal to the second threshold if the preset included angle condition is met. For another example, the re-collected three-dimensional information may include at least one of the width information and the slope information. In this case, in addition to the fact that the depth information is greater than or equal to the second threshold, when the width information is greater than or equal to the third threshold and/or the slope information is less than or equal to the fourth threshold, the obstacle crossing action is performed. In this way, misjudgment can be reduced, and a success rate of obstacle crossing can be increased.

In an example embodiment, the cleaning robot may start an obstacle crossing component to perform the obstacle crossing action by using the obstacle crossing component. The obstacle crossing component may be a component configured to assist in obstacle crossing. The obstacle crossing component has a swing member. The swing member can swing around a swing axis of the swing member. The swing member may swing during startup. Therefore, the swing member can be in contact with the obstacle to generate a relative force with the obstacle, thereby assisting the cleaning robot in obstacle crossing. Alternatively, the cleaning robot may accelerate to cross the step-type obstacle. Obstacle crossing is performed through acceleration, so that a quantity of times of starting the obstacle crossing component can be reduced, a loss caused by obstacle crossing on the cleaning robot can be reduced, and a service life of the obstacle crossing component and a service life of the cleaning robot can be prolonged. In addition, it takes some time to start the obstacle crossing component. Therefore, cleaning time is further reduced, thereby improving cleaning efficiency.

When the three-dimensional information of the step-type obstacle meets the obstacle crossing condition, the cleaning robot may select a specific obstacle crossing manner based on the height information of the step-type obstacle. A manner of performing obstacle crossing by using the obstacle crossing component is suitable for a high step-type obstacle. A manner of performing obstacle crossing through acceleration is suitable for a low step-type obstacle. The cleaning robot may determine whether the height information of the step-type obstacle is greater than or equal to a specified height. When the height information of the step-type obstacle is greater than the specified height and is less than or equal to the first threshold, the obstacle crossing component may be started to perform the obstacle crossing action by using the obstacle crossing component. When the height information of the step-type obstacle is less than the specified height, the cleaning robot may be controlled to accelerate to cross the step-type obstacle. A value range of the specified height may be 3 cm to 5 cm. For example, the specified height may be 3 cm, 4 cm, or 5 cm.

When the height information of the step-type obstacle is greater than the specified height and is less than or equal to the first threshold, the cleaning robot may be controlled to stop when moving to a specified position. Then, the obstacle crossing component may then be started to control the cleaning robot to move, so as to perform the obstacle crossing action by using the obstacle crossing component. A distance between the specified position and the step-type obstacle is less than or equal to a fifth threshold. The fifth threshold is used to enable the cleaning robot to move to the edge of the step-type obstacle. A value range of the fifth threshold may be 0.5 cm to 2 cm. For example, the fifth threshold may be 0.8 cm, 1 cm, or 1.5 cm.

When the height information of the step-type obstacle is less than the specified height, the cleaning robot may obtain a distance between the cleaning robot and the step-type obstacle. The distance between the cleaning robot and the step-type obstacle may include a minimum distance between the cleaning robot and the step-type obstacle. If the distance between the cleaning robot and the step-type obstacle is greater than or equal to a sixth threshold, it is considered that there is a sufficiently long acceleration distance between the cleaning robot and the step-type obstacle, and the cleaning robot may be controlled to accelerate to cross the step-type obstacle. If the distance between the cleaning robot and the step-type obstacle is less than a sixth threshold, it is considered that the distance between the cleaning robot and the step-type obstacle is short, there is no sufficiently long acceleration distance, and the cleaning robot may be controlled to retreat until the distance between the cleaning robot and the step-type obstacle is greater than or equal to the sixth threshold. In this way, there is a sufficiently long distance for the cleaning robot to accelerate. Then, the cleaning robot may be controlled to accelerate to cross the step-type obstacle. Optionally, if the distance between the cleaning robot and the step-type obstacle is greater than or equal to the sixth threshold and less than or equal to a seventh distance, the cleaning robot may be controlled to accelerate. In this way, there can be a sufficiently long acceleration distance between the cleaning robot and the step-type obstacle, and the distance between the cleaning robot and the step-type obstacle can be also be prevented from being excessively large.

It should be noted that, that the three-dimensional information of the step-type obstacle meets the obstacle crossing condition may include: At least both the height information and the depth information meet the obstacle crossing condition. For example, that the three-dimensional information of the step-type obstacle meets the obstacle crossing condition may include:

Only both the height information and the depth information meet the obstacle crossing condition;
only the height information, the depth information, and the width information all meet the obstacle crossing condition;
only the height information, the depth information, and the slope information all meet the obstacle crossing condition; or
the height information, the depth information, the width information, and the slope information all meet the obstacle crossing condition.

According to the movement control method for a cleaning robot, the cleaning robot is provided with the sensor system capable of obtaining the three-dimensional information of the obstacle. In the movement process of the cleaning robot, the three-dimensional information of the step-type obstacle in the front area may be collected by using the sensor system, where the three-dimensional information includes at least the height information and the depth information of the step-type obstacle; and when the height information and the depth information meet the obstacle crossing condition, the obstacle crossing action may be performed to cross the step-type obstacle, to clean the step-type obstacle. In this way, a specific type of the obstacle may be identified by using the sensor system, and refined obstacle crossing may be performed on the step-type obstacle. Both the height information and the depth information of the step-type obstacle are considered during obstacle crossing, so that a real situation of the step-type obstacle can be considered comprehensively. Therefore, refined and intelligent obstacle crossing can be performed on the step-type obstacle, thereby avoiding obstacle crossing abnormality, to ensure that the cleaning robot can perform normal cleaning work. For example, a problem such as falling or being suspended occurs after obstacle crossing.

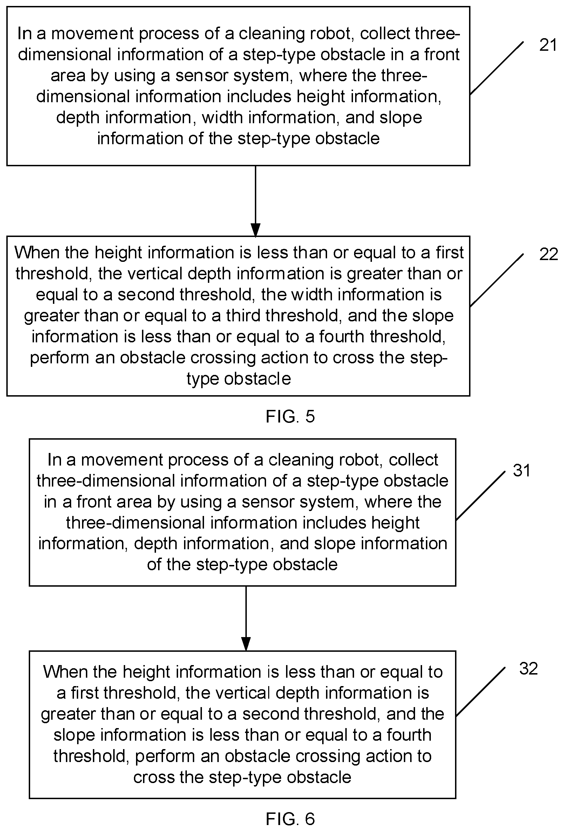

Reference is made to FIG. 5. An embodiment of this specification further provides another movement control method for a cleaning robot. The method includes the following steps.

Step 21: In a movement process of the cleaning robot, collect three-dimensional information of a step-type obstacle in a front area by using a sensor system, where the three-dimensional information includes height information, depth information, width information, and slope information of the step-type obstacle.

Step 22: When the height information is less than or equal to a first threshold, the vertical depth information is greater than or equal to a second threshold, the width information is greater than or equal to a third threshold, and the slope information is less than or equal to a fourth threshold, perform an obstacle crossing action to cross the step-type obstacle.

In an example embodiment, the cleaning robot may clean a working area in a bow-shaped manner. In a bow-shaped cleaning process, the cleaning robot may collect the three-dimensional information of the obstacle in the front area by using the sensor system. Alternatively, in an edge cleaning process, the cleaning robot may collect the three-dimensional information of the obstacle in the front area by using the sensor system. Alternatively, in a process of returning to a base station, the cleaning robot may collect the three-dimensional information of the obstacle in the front area by using the sensor system. The base station is configured to disassemble and/or mount a cleaning component on the cleaning robot, may also charge the cleaning robot, and may also clean debris in a dust collection box of the cleaning robot.

In an example embodiment, the front area may include an effective detection area of the sensor system. The effective detection area may include at least one of the following: an effective field of view range of a monocular vision sensor, an effective field of view range of a binocular vision sensor, an effective distance detection range of a line laser sensor, an effective distance detection range of a surface laser sensor, an effective distance detection range of an LDS sensor, and an effective distance detection range of a Dtof sensor.

In an example embodiment, the step-type obstacle is a building member used to connect different surfaces. Surfaces connected by the step-type obstacle may have different elevations, or may have a same elevation. Surfaces connected by the step-type obstacle may be flat or curved. For example, the step-type obstacle may include a stair step, a ramp step, a step between different indoor areas, and the like. The step between different indoor areas may include a step between a balcony and a living room, a step between a bedroom and a living room, a step between a kitchen and a living room, and the like.

In an example embodiment, in the movement process of the cleaning robot, surrounding environment information in the front area may be collected by the sensor system, and the collected information may be sent to a controller. The controller may determine a type of the obstacle based on the received information, and may obtain the three-dimensional information of the step-type obstacle when the type of the obstacle is a step-type obstacle. Alternatively, the controller may send the received information to a background server. The server may determine a type of the obstacle based on the received information, may obtain the three-dimensional information of the step-type obstacle when the type of the obstacle is a step-type obstacle, and may send the three-dimensional information of the step-type obstacle to the controller.

In an example embodiment, the three-dimensional information may include the height information, the depth information, the width information, and the slope information of the step-type obstacle. When the height information, the depth information, the width information, and the slope information all meet an obstacle crossing condition, the cleaning robot may perform the obstacle crossing action to cross the step-type obstacle. When at least one of the height information, the depth information, the width information, and the slope information does not meet an obstacle crossing condition, the cleaning robot may perform an obstacle avoidance action. When the obstacle crossing condition is not met, edge cleaning is performed, so that a missed cleaning range can be reduced, a cleaning coverage rate can be increased, and a cleaning effect can be improved.

The obstacle crossing condition includes at least: the height information is less than or equal to the first threshold, the vertical depth information is greater than or equal to the second threshold, the width information is greater than or equal to the third threshold, and the slope information is less than or equal to the fourth threshold. In this case, only when the height information of the step-type obstacle is less than or equal to the first threshold, the vertical depth information of the step-type obstacle is greater than or equal to the second threshold, the width information of the step-type obstacle is greater than or equal to the third threshold, and the slope information of the step-type obstacle is less than or equal to the fourth threshold, the cleaning robot performs the obstacle crossing action to cross the step-type obstacle. The first threshold may be a maximum obstacle crossing height of the cleaning robot. The first threshold may be determined based on a height between a body and the working surface of the cleaning robot. The second threshold may be a minimum obstacle crossing vertical depth of the cleaning robot. The second threshold may be determined based on a size of the cleaning robot. The third threshold may be a minimum obstacle crossing width of the cleaning robot. The third threshold may be determined based on the size of the cleaning robot. The fourth threshold may be a maximum obstacle crossing slope of the cleaning robot. The fourth threshold may be determined based on attribute information such as a weight of the cleaning robot and a friction coefficient of a drive wheel.

In an example embodiment, when the height information of the step-type obstacle is less than or equal to the first threshold, a movement direction of the cleaning robot may be further adjusted, so that an included angle between a detection direction of the sensor system and a first surface of the step-type obstacle meets a preset included angle condition. The preset included angle condition is used to reduce a deviation between the sensor system and the first surface of the step-type obstacle, so that other three-dimensional information such as the depth information, the width information, and the slope information of the obstacle can be accurately obtained. Optionally, the preset included angle condition may be 85° to 95°. Therefore, the sensor system can directly face the first surface of the step-type obstacle, so that the sensor system can accurately obtain other three-dimensional information such as the depth information, the width information, and the slope information of the obstacle. When the included angle between the detection direction of the sensor system and the first surface of the step-type obstacle meets the preset included angle condition, the three-dimensional information of the step-type obstacle in the front area may be re-collected by using the sensor system, for example, at least one of the depth information, the width information, and the slope information. For example, if the re-collected three-dimensional information includes the depth information of the step-type obstacle, the obstacle crossing action may be performed when the depth information is greater than or equal to the second threshold if the preset included angle condition is met. For another example, the re-collected three-dimensional information may include at least one of the width information and the slope information. In this case, in addition to the fact that the depth information is greater than or equal to the second threshold, when the width information is greater than or equal to the third threshold and/or the slope information is less than or equal to the fourth threshold, the obstacle crossing action is performed. In this way, misjudgment can be reduced, and a success rate of obstacle crossing can be increased.

In an example embodiment, the cleaning robot may start an obstacle crossing component to perform the obstacle crossing action by using the obstacle crossing component. The obstacle crossing component may be a component configured to assist in obstacle crossing. The obstacle crossing component has a swing member. The swing member can swing around a swing axis of the swing member. The swing member may swing during startup. Therefore, the swing member can be in contact with the obstacle to generate a relative force with the obstacle, thereby assisting the cleaning robot in obstacle crossing. Alternatively, the cleaning robot may accelerate to cross the step-type obstacle. Obstacle crossing is performed through acceleration, so that a quantity of times of starting the obstacle crossing component can be reduced, a loss caused by obstacle crossing on the cleaning robot can be reduced, and a service life of the obstacle crossing component and a service life of the cleaning robot can be prolonged. In addition, it takes some time to start the obstacle crossing component. Therefore, cleaning time is further reduced, thereby improving cleaning efficiency.

When the three-dimensional information of the step-type obstacle meets the obstacle crossing condition, the cleaning robot may select a specific obstacle crossing manner based on the height information of the step-type obstacle. A manner of performing obstacle crossing by using the obstacle crossing component is suitable for a high step-type obstacle. A manner of performing obstacle crossing through acceleration is suitable for a low step-type obstacle. The cleaning robot may determine whether the height information of the step-type obstacle is greater than or equal to a specified height. When the height information of the step-type obstacle is greater than the specified height and is less than or equal to the first threshold, the obstacle crossing component may be started to perform the obstacle crossing action by using the obstacle crossing component. When the height information of the step-type obstacle is less than the specified height, the cleaning robot may be controlled to accelerate to cross the step-type obstacle. A value range of the specified height may be 3 cm to 5 cm. For example, the specified height may be 3 cm, 4 cm, or 5 cm.

When the height information of the step-type obstacle is greater than the specified height and is less than or equal to the first threshold, the cleaning robot may be controlled to stop when moving to a specified position. Then, the obstacle crossing component may then be started to control the cleaning robot to move, so as to perform the obstacle crossing action by using the obstacle crossing component. A distance between the specified position and the step-type obstacle is less than or equal to a fifth threshold. The fifth threshold is used to enable the cleaning robot to move to the edge of the step-type obstacle. A value range of the fifth threshold may be 0.5 cm to 2 cm. For example, the fifth threshold may be 0.8 cm, 1 cm, or 1.5 cm.

When the height information of the step-type obstacle is less than the specified height, the cleaning robot may obtain a distance between the cleaning robot and the step-type obstacle. The distance between the cleaning robot and the step-type obstacle may include a minimum distance between the cleaning robot and the step-type obstacle. If the distance between the cleaning robot and the step-type obstacle is greater than or equal to a sixth threshold, it is considered that there is a sufficiently long acceleration distance between the cleaning robot and the step-type obstacle, and the cleaning robot may be controlled to accelerate to cross the step-type obstacle. If the distance between the cleaning robot and the step-type obstacle is less than a sixth threshold, it is considered that the distance between the cleaning robot and the step-type obstacle is short, there is no sufficiently long acceleration distance, and the cleaning robot may be controlled to retreat until the distance between the cleaning robot and the step-type obstacle is greater than or equal to the sixth threshold. In this way, there is a sufficiently long distance for the cleaning robot to accelerate. Then, the cleaning robot may be controlled to accelerate to cross the step-type obstacle. Optionally, if the distance between the cleaning robot and the step-type obstacle is greater than or equal to the sixth threshold and less than or equal to a seventh distance, the cleaning robot may be controlled to accelerate. In this way, there can be a sufficiently long acceleration distance between the cleaning robot and the step-type obstacle, and the distance between the cleaning robot and the step-type obstacle can be also be prevented from being excessively large.

According to the movement control method for a cleaning robot in this embodiment of this specification, a specific type of the obstacle may be identified by using the sensor system, and refined obstacle crossing may be performed on the step-type obstacle. The height information, the depth information, the width information, and the slope information of the step-type obstacle are all considered during obstacle crossing, so that a real situation of the step-type obstacle can be considered comprehensively. Therefore, more refined and intelligent obstacle crossing can be performed on the step-type obstacle, thereby avoiding obstacle crossing abnormality. For example, a problem such as falling or being suspended occurs after obstacle crossing.

Reference is made to FIG. 6. An embodiment of this specification further provides another movement control method for a cleaning robot. The method includes the following steps.

Step 31: In a movement process of the cleaning robot, collect three-dimensional information of a step-type obstacle in a front area by using a sensor system, where the three-dimensional information includes height information, depth information, and slope information of the step-type obstacle.

Step 32: When the height information is less than or equal to a first threshold, the vertical depth information is greater than or equal to a second threshold, and the slope information is less than or equal to a fourth threshold, perform an obstacle crossing action to cross the step-type obstacle.

In an example embodiment, the cleaning robot may clean a working area in a bow-shaped manner. In a bow-shaped cleaning process, the cleaning robot may collect the three-dimensional information of the obstacle in the front area by using the sensor system. Alternatively, in an edge cleaning process, the cleaning robot may collect the three-dimensional information of the obstacle in the front area by using the sensor system. Alternatively, in a process of returning to a base station, the cleaning robot may collect the three-dimensional information of the obstacle in the front area by using the sensor system. The base station is configured to disassemble and/or mount a cleaning component on the cleaning robot, may also charge the cleaning robot, and may also clean debris in a dust collection box of the cleaning robot.

In an example embodiment, the front area may include an effective detection area of the sensor system. The effective detection area may include at least one of the following: an effective field of view range of a monocular vision sensor, an effective field of view range of a binocular vision sensor, an effective distance detection range of a line laser sensor, an effective distance detection range of a surface laser sensor, an effective distance detection range of an LDS sensor, and an effective distance detection range of a Dtof sensor.

In an example embodiment, the step-type obstacle is a building member used to connect different surfaces. Surfaces connected by the step-type obstacle may have different elevations, or may have a same elevation. Surfaces connected by the step-type obstacle may be flat or curved. For example, the step-type obstacle may include a stair step, a ramp step, a step between different indoor areas, and the like. The step between different indoor areas may include a step between a balcony and a living room, a step between a bedroom and a living room, a step between a kitchen and a living room, and the like.

In an example embodiment, in the movement process of the cleaning robot, surrounding environment information in the front area may be collected by the sensor system, and the collected information may be sent to a controller. The controller may determine a type of the obstacle based on the received information, and may obtain the three-dimensional information of the step-type obstacle when the type of the obstacle is a step-type obstacle. Alternatively, the controller may send the received information to a background server. The server may determine a type of the obstacle based on the received information, may obtain the three-dimensional information of the step-type obstacle when the type of the obstacle is a step-type obstacle, and may send the three-dimensional information of the step-type obstacle to the controller.

In an example embodiment, the three-dimensional information may include the height information, the depth information, and the slope information of the step-type obstacle. When the height information, the depth information, and the slope information all meet an obstacle crossing condition, the cleaning robot may perform the obstacle crossing action to cross the step-type obstacle. When at least one of the height information, the depth information, and the slope information does not meet an obstacle crossing condition, the cleaning robot may perform an obstacle avoidance action to clean an edge of the step-type obstacle. When the obstacle crossing condition is not met, edge cleaning is performed, so that a missed cleaning range can be reduced, a cleaning coverage rate can be increased, and a cleaning effect can be improved.

The obstacle crossing condition includes at least: the height information is less than or equal to the first threshold, the vertical depth information is greater than or equal to the second threshold, and the slope information is less than or equal to the fourth threshold. In this case, at least when the height information of the step-type obstacle is less than or equal to the first threshold, the vertical depth information of the step-type obstacle is greater than or equal to the second threshold, and the slope information of the step-type obstacle is less than or equal to the fourth threshold, the cleaning robot performs the obstacle crossing action to cross the step-type obstacle. The first threshold may be a maximum obstacle crossing height of the cleaning robot. The first threshold may be determined based on a height between a body and the working surface of the cleaning robot. The second threshold may be a minimum obstacle crossing vertical depth of the cleaning robot. The second threshold may be determined based on a size of the cleaning robot. The fourth threshold may be a maximum obstacle crossing slope of the cleaning robot. The fourth threshold may be determined based on attribute information such as a weight of the cleaning robot and a friction coefficient of a drive wheel.

In an example embodiment, the three-dimensional information may include the height information, the depth information, width information, and the slope information of the step-type obstacle. When the height information, the depth information, the width information, and the slope information all meet an obstacle crossing condition, the cleaning robot may perform the obstacle crossing action to cross the step-type obstacle. When at least one of the height information, the depth information, the width information, and the slope information does not meet an obstacle crossing condition, the cleaning robot may perform an obstacle avoidance action. When the obstacle crossing condition is not met, edge cleaning is performed, so that a missed cleaning range can be reduced, a cleaning coverage rate can be increased, and a cleaning effect can be improved.

The obstacle crossing condition includes at least: the height information is less than or equal to the first threshold, the vertical depth information is greater than or equal to the second threshold, the width information is greater than or equal to a third threshold, and the slope information is less than or equal to the fourth threshold. In this case, only when the height information of the step-type obstacle is less than or equal to the first threshold, the vertical depth information of the step-type obstacle is greater than or equal to the second threshold, the width information of the step-type obstacle is greater than or equal to the third threshold, and the slope information of the step-type obstacle is less than or equal to the fourth threshold, the cleaning robot performs the obstacle crossing action to cross the step-type obstacle. The first threshold may be a maximum obstacle crossing height of the cleaning robot. The first threshold may be determined based on a height between a body and the working surface of the cleaning robot. The second threshold may be a minimum obstacle crossing vertical depth of the cleaning robot. The second threshold may be determined based on a size of the cleaning robot. The third threshold may be a minimum obstacle crossing width of the cleaning robot. The third threshold may be determined based on the size of the cleaning robot. The fourth threshold may be a maximum obstacle crossing slope of the cleaning robot. The fourth threshold may be determined based on attribute information such as a weight of the cleaning robot and a friction coefficient of a drive wheel.

In an example embodiment, when the height information of the step-type obstacle is less than or equal to the first threshold, a movement direction of the cleaning robot may be further adjusted, so that an included angle between a detection direction of the sensor system and a first surface of the step-type obstacle meets a preset included angle condition. The preset included angle condition is used to reduce a deviation between the sensor system and the first surface of the step-type obstacle, so that other three-dimensional information such as the depth information, the width information, and the slope information of the obstacle can be accurately obtained. Optionally, the preset included angle condition may be 85° to 95°. Therefore, the sensor system can directly face the first surface of the step-type obstacle, so that the sensor system can accurately obtain other three-dimensional information such as the depth information, the width information, and the slope information of the obstacle. When the included angle between the detection direction of the sensor system and the first surface of the step-type obstacle meets the preset included angle condition, the three-dimensional information of the step-type obstacle in the front area may be re-collected by using the sensor system, for example, at least one of the depth information, the width information, and the slope information. For example, if the re-collected three-dimensional information includes the depth information of the step-type obstacle, the obstacle crossing action may be performed when the depth information is greater than or equal to the second threshold if the preset included angle condition is met. For another example, the re-collected three-dimensional information may include at least one of the width information and the slope information. In this case, in addition to the fact that the depth information is greater than or equal to the second threshold, when the width information is greater than or equal to the third threshold and/or the slope information is less than or equal to the fourth threshold, the obstacle crossing action is performed. In this way, misjudgment can be reduced, and a success rate of obstacle crossing can be increased.

In an example embodiment, the cleaning robot may start an obstacle crossing component to perform the obstacle crossing action by using the obstacle crossing component. The obstacle crossing component may be a component configured to assist in obstacle crossing. The obstacle crossing component has a swing member. The swing member can swing around a swing axis of the swing member. The swing member may swing during startup. Therefore, the swing member can be in contact with the obstacle to generate a relative force with the obstacle, thereby assisting the cleaning robot in obstacle crossing. Alternatively, the cleaning robot may accelerate to cross the step-type obstacle. Obstacle crossing is performed through acceleration, so that a quantity of times of starting the obstacle crossing component can be reduced, a loss caused by obstacle crossing on the cleaning robot can be reduced, and a service life of the obstacle crossing component and a service life of the cleaning robot can be prolonged. In addition, it takes some time to start the obstacle crossing component. Therefore, cleaning time is further reduced, thereby improving cleaning efficiency.

When the three-dimensional information of the step-type obstacle meets the obstacle crossing condition, the cleaning robot may select a specific obstacle crossing manner based on the height information of the step-type obstacle. A manner of performing obstacle crossing by using the obstacle crossing component is suitable for a high step-type obstacle. A manner of performing obstacle crossing through acceleration is suitable for a low step-type obstacle. The cleaning robot may determine whether the height information of the step-type obstacle is greater than or equal to a specified height. When the height information of the step-type obstacle is greater than the specified height and is less than or equal to the first threshold, the obstacle crossing component may be started to perform the obstacle crossing action by using the obstacle crossing component. When the height information of the step-type obstacle is less than the specified height, the cleaning robot may be controlled to accelerate to cross the step-type obstacle. A value range of the specified height may be 3 cm to 5 cm. For example, the specified height may be 3 cm, 4 cm, or 5 cm.

When the height information of the step-type obstacle is greater than the specified height and is less than or equal to the first threshold, the cleaning robot may be controlled to stop when moving to a specified position. Then, the obstacle crossing component may then be started to control the cleaning robot to move, so as to perform the obstacle crossing action by using the obstacle crossing component. A distance between the specified position and the step-type obstacle is less than or equal to a fifth threshold. The fifth threshold is used to enable the cleaning robot to move to the edge of the step-type obstacle. A value range of the fifth threshold may be 0.5 cm to 2 cm. For example, the fifth threshold may be 0.8 cm, 1 cm, or 1.5 cm.

When the height information of the step-type obstacle is less than the specified height, the cleaning robot may obtain a distance between the cleaning robot and the step-type obstacle. The distance between the cleaning robot and the step-type obstacle may include a minimum distance between the cleaning robot and the step-type obstacle. If the distance between the cleaning robot and the step-type obstacle is greater than or equal to a sixth threshold, it is considered that there is a sufficiently long acceleration distance between the cleaning robot and the step-type obstacle, and the cleaning robot may be controlled to accelerate to cross the step-type obstacle. If the distance between the cleaning robot and the step-type obstacle is less than a sixth threshold, it is considered that the distance between the cleaning robot and the step-type obstacle is short, there is no sufficiently long acceleration distance, and the cleaning robot may be controlled to retreat until the distance between the cleaning robot and the step-type obstacle is greater than or equal to the sixth threshold. In this way, there is a sufficiently long distance for the cleaning robot to accelerate. Then, the cleaning robot may be controlled to accelerate to cross the step-type obstacle. Optionally, if the distance between the cleaning robot and the step-type obstacle is greater than or equal to the sixth threshold and less than or equal to a seventh distance, the cleaning robot may be controlled to accelerate. In this way, there can be a sufficiently long acceleration distance between the cleaning robot and the step-type obstacle, and the distance between the cleaning robot and the step-type obstacle can be also be prevented from being excessively large.

According to the movement control method for a cleaning robot in this embodiment of this specification, a specific type of the obstacle may be identified by using the sensor system, and refined obstacle crossing may be performed on the step-type obstacle. The height information, the depth information, and the slope information of the step-type obstacle are all considered during obstacle crossing, so that a real situation of the step-type obstacle can be considered comprehensively. Therefore, more refined and intelligent obstacle crossing can be performed on the step-type obstacle, thereby avoiding obstacle crossing abnormality. For example, a problem such as falling or being suspended occurs after obstacle crossing.

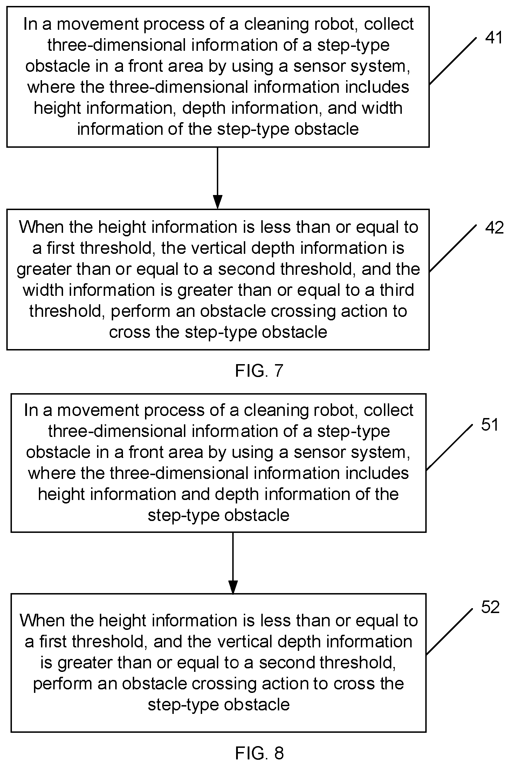

Reference is made to FIG. 7. An embodiment of this specification further provides another movement control method for a cleaning robot. The method includes the following steps.

Step 41: In a movement process of the cleaning robot, collect three-dimensional information of a step-type obstacle in a front area by using a sensor system, where the three-dimensional information includes height information, depth information, and width information of the step-type obstacle.

Step 42: When the height information is less than or equal to a first threshold, the vertical depth information is greater than or equal to a second threshold, and the width information is greater than or equal to a third threshold, perform an obstacle crossing action to cross the step-type obstacle.

In an example embodiment, the cleaning robot may clean a working area in a bow-shaped manner. In a bow-shaped cleaning process, the cleaning robot may collect the three-dimensional information of the obstacle in the front area by using the sensor system. Alternatively, in an edge cleaning process, the cleaning robot may collect the three-dimensional information of the obstacle in the front area by using the sensor system. Alternatively, in a process of returning to a base station, the cleaning robot may collect the three-dimensional information of the obstacle in the front area by using the sensor system. The base station is configured to disassemble and/or mount a cleaning component on the cleaning robot, may also charge the cleaning robot, and may also clean debris in a dust collection box of the cleaning robot.

In an example embodiment, the front area may include an effective detection area of the sensor system. The effective detection area may include at least one of the following: an effective field of view range of a monocular vision sensor, an effective field of view range of a binocular vision sensor, an effective distance detection range of a line laser sensor, an effective distance detection range of a surface laser sensor, an effective distance detection range of an LDS sensor, and an effective distance detection range of a Dtof sensor.

In an example embodiment, the step-type obstacle is a building member used to connect different surfaces. Surfaces connected by the step-type obstacle may have different elevations, or may have a same elevation. Surfaces connected by the step-type obstacle may be flat or curved. For example, the step-type obstacle may include a stair step, a ramp step, a step between different indoor areas, and the like. The step between different indoor areas may include a step between a balcony and a living room, a step between a bedroom and a living room, a step between a kitchen and a living room, and the like.

In an example embodiment, in the movement process of the cleaning robot, surrounding environment information in the front area may be collected by the sensor system, and the collected information may be sent to a controller. The controller may determine a type of the obstacle based on the received information, and may obtain the three-dimensional information of the step-type obstacle when the type of the obstacle is a step-type obstacle. Alternatively, the controller may send the received information to a background server. The server may determine a type of the obstacle based on the received information, may obtain the three-dimensional information of the step-type obstacle when the type of the obstacle is a step-type obstacle, and may send the three-dimensional information of the step-type obstacle to the controller.

In an example embodiment, the three-dimensional information may include the height information, the depth information, and the width information of the step-type obstacle. When the height information, the depth information, and the width information all meet an obstacle crossing condition, the cleaning robot may perform the obstacle crossing action to cross the step-type obstacle. When at least one of the height information, the depth information, and the width information does not meet an obstacle crossing condition, the cleaning robot may perform an obstacle avoidance action to clean an edge of the step-type obstacle. When the obstacle crossing condition is not met, edge cleaning is performed, so that a missed cleaning range can be reduced, a cleaning coverage rate can be increased, and a cleaning effect can be improved.

The obstacle crossing condition includes at least: the height information is less than or equal to the first threshold, the vertical depth information is greater than or equal to the second threshold, and the width information is greater than or equal to the third threshold. In this case, at least when the height information of the step-type obstacle is less than or equal to the first threshold, the vertical depth information of the step-type obstacle is greater than or equal to the second threshold, and the width information of the step-type obstacle is greater than or equal to the third threshold, the cleaning robot performs the obstacle crossing action to cross the step-type obstacle. The first threshold may be a maximum obstacle crossing height of the cleaning robot. The first threshold may be determined based on a height between a body and the working surface of the cleaning robot. The second threshold may be a minimum obstacle crossing vertical depth of the cleaning robot. The second threshold may be determined based on a size of the cleaning robot. For example, the second threshold may be determined based on a maximum diameter of the cleaning robot. The third threshold may be a minimum obstacle crossing width of the cleaning robot. The third threshold may be determined based on the size of the cleaning robot. For example, the third threshold may be determined based on the maximum diameter of the cleaning robot.

In an example embodiment, the three-dimensional information may include the height information, the depth information, the width information, and slope information of the step-type obstacle. When the height information, the depth information, the width information, and the slope information all meet an obstacle crossing condition, the cleaning robot may perform the obstacle crossing action to cross the step-type obstacle. When at least one of the height information, the depth information, the width information, and the slope information does not meet an obstacle crossing condition, the cleaning robot may perform an obstacle avoidance action. When the obstacle crossing condition is not met, edge cleaning is performed, so that a missed cleaning range can be reduced, a cleaning coverage rate can be increased, and a cleaning effect can be improved.

The obstacle crossing condition includes at least: the height information is less than or equal to the first threshold, the vertical depth information is greater than or equal to the second threshold, the width information is greater than or equal to the third threshold, and the slope information is less than or equal to a fourth threshold. In this case, only when the height information of the step-type obstacle is less than or equal to the first threshold, the vertical depth information of the step-type obstacle is greater than or equal to the second threshold, the width information of the step-type obstacle is greater than or equal to the third threshold, and the slope information of the step-type obstacle is less than or equal to the fourth threshold, the cleaning robot performs the obstacle crossing action to cross the step-type obstacle. The first threshold may be a maximum obstacle crossing height of the cleaning robot. The first threshold may be determined based on a height between a body and the working surface of the cleaning robot. The second threshold may be a minimum obstacle crossing vertical depth of the cleaning robot. The second threshold may be determined based on a size of the cleaning robot. For example, the second threshold may be determined based on a maximum diameter of the cleaning robot. The third threshold may be a minimum obstacle crossing width of the cleaning robot. The third threshold may be determined based on the size of the cleaning robot. The fourth threshold may be a maximum obstacle crossing slope of the cleaning robot. The fourth threshold may be determined based on attribute information such as a weight of the cleaning robot and a friction coefficient of a drive wheel. A value range of the fourth threshold may be 20° to 40°.

According to the movement control method for a cleaning robot in this embodiment of this specification, a specific type of the obstacle may be identified by using the sensor system, and refined obstacle crossing may be performed on the step-type obstacle. The height information, the depth information, and the width information of the step-type obstacle are all considered during obstacle crossing, so that a real situation of the step-type obstacle can be considered comprehensively. Therefore, more refined and intelligent obstacle crossing can be performed on the step-type obstacle, thereby avoiding obstacle crossing abnormality. For example, a problem such as falling or being suspended occurs after obstacle crossing.

Reference is made to FIG. 8. An embodiment of this specification further provides another movement control method for a cleaning robot. The method includes the following steps.

Step 51: In a movement process of the cleaning robot, collect three-dimensional information of a step-type obstacle in a front area by using a sensor system, where the three-dimensional information includes height information and depth information of the step-type obstacle.

Step 52: When the height information is less than or equal to a first threshold, and the vertical depth information is greater than or equal to a second threshold, perform an obstacle crossing action to cross the step-type obstacle.

In an example embodiment, the cleaning robot may clean a working area in a bow-shaped manner. In a bow-shaped cleaning process, the cleaning robot may collect the three-dimensional information of the obstacle in the front area by using the sensor system. Alternatively, in an edge cleaning process, the cleaning robot may collect the three-dimensional information of the obstacle in the front area by using the sensor system. Alternatively, in a process of returning to a base station, the cleaning robot may collect the three-dimensional information of the obstacle in the front area by using the sensor system. The base station is configured to disassemble and/or mount a cleaning component on the cleaning robot, may also charge the cleaning robot, and may also clean debris in a dust collection box of the cleaning robot.

In an example embodiment, the front area may include an effective detection area of the sensor system. The effective detection area may include at least one of the following: an effective field of view range of a monocular vision sensor, an effective field of view range of a binocular vision sensor, an effective distance detection range of a line laser sensor, an effective distance detection range of a surface laser sensor, an effective distance detection range of an LDS sensor, and an effective distance detection range of a Dtof sensor.

In an example embodiment, the step-type obstacle is a building member used to connect different surfaces. Surfaces connected by the step-type obstacle may have different elevations, or may have a same elevation. Surfaces connected by the step-type obstacle may be flat or curved. For example, the step-type obstacle may include a stair step, a ramp step, a step between different indoor areas, and the like. The step between different indoor areas may include a step between a balcony and a living room, a step between a bedroom and a living room, a step between a kitchen and a living room, and the like.

In an example embodiment, in the movement process of the cleaning robot, surrounding environment information in the front area may be collected by the sensor system, and the collected information may be sent to a controller. The controller may determine a type of the obstacle based on the received information, and may obtain the three-dimensional information of the step-type obstacle when the type of the obstacle is a step-type obstacle. Alternatively, the controller may send the received information to a background server. The server may determine a type of the obstacle based on the received information, may obtain the three-dimensional information of the step-type obstacle when the type of the obstacle is a step-type obstacle, and may send the three-dimensional information of the step-type obstacle to the controller.

In an example embodiment, the three-dimensional information may include only the height information and the depth information of the step-type obstacle. In this case, when both the height information and the depth information meet an obstacle crossing condition, the cleaning robot can perform the obstacle crossing action to cross the step-type obstacle. When the height information and/or the depth information do or does not meet an obstacle crossing condition, the cleaning robot may perform an obstacle avoidance action to clean an edge of the step-type obstacle. When the obstacle crossing condition is not met, edge cleaning is performed, so that a missed cleaning range can be reduced, a cleaning coverage rate can be increased, and a cleaning effect can be improved.

In an example embodiment, the three-dimensional information may include the height information, the depth information, and width information of the step-type obstacle. When the height information, the depth information, and the width information all meet an obstacle crossing condition, the cleaning robot may perform the obstacle crossing action to cross the step-type obstacle. When at least one of the height information, the depth information, and the width information does not meet an obstacle crossing condition, the cleaning robot may perform an obstacle avoidance action to clean an edge of the step-type obstacle. When the obstacle crossing condition is not met, edge cleaning is performed, so that a missed cleaning range can be reduced, a cleaning coverage rate can be increased, and a cleaning effect can be improved.

The obstacle crossing condition includes at least: the height information is less than or equal to the first threshold, the vertical depth information is greater than or equal to the second threshold, and the width information is greater than or equal to a third threshold. In this case, at least when the height information of the step-type obstacle is less than or equal to the first threshold, the vertical depth information of the step-type obstacle is greater than or equal to the second threshold, and the width information of the step-type obstacle is greater than or equal to the third threshold, the cleaning robot performs the obstacle crossing action to cross the step-type obstacle. The first threshold may be a maximum obstacle crossing height of the cleaning robot. The first threshold may be determined based on a height between a body and the working surface of the cleaning robot. The second threshold may be a minimum obstacle crossing vertical depth of the cleaning robot. The second threshold may be determined based on a size of the cleaning robot. For example, the second threshold may be determined based on a maximum diameter of the cleaning robot. The third threshold may be a minimum obstacle crossing width of the cleaning robot. The third threshold may be determined based on the size of the cleaning robot.

In an example embodiment, the three-dimensional information may include the height information, the depth information, and slope information of the step-type obstacle. When the height information, the depth information, and the slope information all meet an obstacle crossing condition, the cleaning robot may perform the obstacle crossing action to cross the step-type obstacle. When at least one of the height information, the depth information, and the slope information does not meet an obstacle crossing condition, the cleaning robot may perform an obstacle avoidance action to clean an edge of the step-type obstacle. When the obstacle crossing condition is not met, edge cleaning is performed, so that a missed cleaning range can be reduced, a cleaning coverage rate can be increased, and a cleaning effect can be improved.

The obstacle crossing condition includes at least: the height information is less than or equal to the first threshold, the vertical depth information is greater than or equal to the second threshold, and the slope information is less than or equal to a fourth threshold. In this case, at least when the height information of the step-type obstacle is less than or equal to the first threshold, the vertical depth information of the step-type obstacle is greater than or equal to the second threshold, and the slope information of the step-type obstacle is less than or equal to the fourth threshold, the cleaning robot performs the obstacle crossing action to cross the step-type obstacle. The first threshold may be a maximum obstacle crossing height of the cleaning robot. The first threshold may be determined based on a height between a body and the working surface of the cleaning robot. The second threshold may be a minimum obstacle crossing vertical depth of the cleaning robot. The second threshold may be determined based on a size of the cleaning robot. For example, the second threshold may be determined based on a maximum diameter of the cleaning robot. The fourth threshold may be a maximum obstacle crossing slope of the cleaning robot. The fourth threshold may be determined based on attribute information such as a weight of the cleaning robot and a friction coefficient of a drive wheel. A value range of the fourth threshold may be 20° to 40°.

In an example embodiment, the three-dimensional information may include the height information, the depth information, width information, and slope information of the step-type obstacle. When the height information, the depth information, the width information, and the slope information all meet an obstacle crossing condition, the cleaning robot may perform the obstacle crossing action to cross the step-type obstacle. When at least one of the height information, the depth information, the width information, and the slope information does not meet an obstacle crossing condition, the cleaning robot may perform an obstacle avoidance action. When the obstacle crossing condition is not met, edge cleaning is performed, so that a missed cleaning range can be reduced, a cleaning coverage rate can be increased, and a cleaning effect can be improved.

The obstacle crossing condition includes at least: the height information is less than or equal to the first threshold, the vertical depth information is greater than or equal to the second threshold, the width information is greater than or equal to a third threshold, and the slope information is less than or equal to a fourth threshold. In this case, only when the height information of the step-type obstacle is less than or equal to the first threshold, the vertical depth information of the step-type obstacle is greater than or equal to the second threshold, the width information of the step-type obstacle is greater than or equal to the third threshold, and the slope information of the step-type obstacle is less than or equal to the fourth threshold, the cleaning robot performs the obstacle crossing action to cross the step-type obstacle. The first threshold may be a maximum obstacle crossing height of the cleaning robot. The first threshold may be determined based on a height between a body and the working surface of the cleaning robot. The second threshold may be a minimum obstacle crossing vertical depth of the cleaning robot. The second threshold may be determined based on a size of the cleaning robot. For example, the second threshold may be determined based on a maximum diameter of the cleaning robot. The third threshold may be a minimum obstacle crossing width of the cleaning robot. The third threshold may be determined based on the size of the cleaning robot. The fourth threshold may be a maximum obstacle crossing slope of the cleaning robot. The fourth threshold may be determined based on attribute information such as a weight of the cleaning robot and a friction coefficient of a drive wheel. A value range of the fourth threshold may be 20° to 40°.

In an example embodiment, when the height information of the step-type obstacle is less than or equal to the first threshold, a movement direction of the cleaning robot may be further adjusted, so that an included angle between a detection direction of the sensor system and a first surface of the step-type obstacle meets a preset included angle condition. The preset included angle condition is used to reduce a deviation between the sensor system and the first surface of the step-type obstacle, so that other three-dimensional information such as the depth information, the width information, and the slope information of the obstacle can be accurately obtained. Optionally, the preset included angle condition may be 85° to 95°. Therefore, the sensor system can directly face the first surface of the step-type obstacle, so that the sensor system can accurately obtain other three-dimensional information such as the depth information, the width information, and the slope information of the obstacle. When the included angle between the detection direction of the sensor system and the first surface of the step-type obstacle meets the preset included angle condition, the three-dimensional information of the step-type obstacle in the front area may be re-collected by using the sensor system, for example, at least one of the depth information, the width information, and the slope information. For example, if the re-collected three-dimensional information includes the depth information of the step-type obstacle, the obstacle crossing action may be performed when the depth information is greater than or equal to the second threshold if the preset included angle condition is met. For another example, the re-collected three-dimensional information may include at least one of the width information and the slope information. In this case, in addition to the fact that the depth information is greater than or equal to the second threshold, when the width information is greater than or equal to the third threshold and/or the slope information is less than or equal to the fourth threshold, the obstacle crossing action is performed. In this way, misjudgment can be reduced, and a success rate of obstacle crossing can be increased.

In an example embodiment, the cleaning robot may start an obstacle crossing component to perform the obstacle crossing action by using the obstacle crossing component. The obstacle crossing component may be a component configured to assist in obstacle crossing. The obstacle crossing component has a swing member. The swing member can swing around a swing axis of the swing member. The swing member may swing during startup. Therefore, the swing member can be in contact with the obstacle to generate a relative force with the obstacle, thereby assisting the cleaning robot in obstacle crossing. Alternatively, the cleaning robot may accelerate to cross the step-type obstacle. Obstacle crossing is performed through acceleration, so that a quantity of times of starting the obstacle crossing component can be reduced, a loss caused by obstacle crossing on the cleaning robot can be reduced, and a service life of the obstacle crossing component and a service life of the cleaning robot can be prolonged. In addition, it takes some time to start the obstacle crossing component. Therefore, cleaning time is further reduced, thereby improving cleaning efficiency.

When the three-dimensional information of the step-type obstacle meets the obstacle crossing condition, the cleaning robot may select a specific obstacle crossing manner based on the height information of the step-type obstacle. A manner of performing obstacle crossing by using the obstacle crossing component is suitable for a high step-type obstacle. A manner of performing obstacle crossing through acceleration is suitable for a low step-type obstacle. The cleaning robot may determine whether the height information of the step-type obstacle is greater than or equal to a specified height. When the height information of the step-type obstacle is greater than the specified height and is less than or equal to the first threshold, the obstacle crossing component may be started to perform the obstacle crossing action by using the obstacle crossing component. When the height information of the step-type obstacle is less than the specified height, the cleaning robot may be controlled to accelerate to cross the step-type obstacle. A value range of the specified height may be 3 cm to 5 cm. For example, the specified height may be 3 cm, 4 cm, or 5 cm.

When the height information of the step-type obstacle is greater than the specified height and is less than or equal to the first threshold, the cleaning robot may be controlled to stop when moving to a specified position. Then, the obstacle crossing component may then be started to control the cleaning robot to move, so as to perform the obstacle crossing action by using the obstacle crossing component. A distance between the specified position and the step-type obstacle is less than or equal to a fifth threshold. The fifth threshold is used to enable the cleaning robot to move to the edge of the step-type obstacle. A value range of the fifth threshold may be 0.5 cm to 2 cm. For example, the fifth threshold may be 0.8 cm, 1 cm, or 1.5 cm.

When the height information of the step-type obstacle is less than the specified height, the cleaning robot may obtain a distance between the cleaning robot and the step-type obstacle. The distance between the cleaning robot and the step-type obstacle may include a minimum distance between the cleaning robot and the step-type obstacle. If the distance between the cleaning robot and the step-type obstacle is greater than or equal to a sixth threshold, it is considered that there is a sufficiently long acceleration distance between the cleaning robot and the step-type obstacle, and the cleaning robot may be controlled to accelerate to cross the step-type obstacle. If the distance between the cleaning robot and the step-type obstacle is less than a sixth threshold, it is considered that the distance between the cleaning robot and the step-type obstacle is short, there is no sufficiently long acceleration distance, and the cleaning robot may be controlled to retreat until the distance between the cleaning robot and the step-type obstacle is greater than or equal to the sixth threshold. In this way, there is a sufficiently long distance for the cleaning robot to accelerate. Then, the cleaning robot may be controlled to accelerate to cross the step-type obstacle. Optionally, if the distance between the cleaning robot and the step-type obstacle is greater than or equal to the sixth threshold and less than or equal to a seventh distance, the cleaning robot may be controlled to accelerate. In this way, there can be a sufficiently long acceleration distance between the cleaning robot and the step-type obstacle, and the distance between the cleaning robot and the step-type obstacle can be also be prevented from being excessively large.

According to the movement control method for a cleaning robot in this embodiment of this specification, a specific type of the obstacle may be identified by using the sensor system, and refined obstacle crossing may be performed on the step-type obstacle. Both the height information and the depth information of the step-type obstacle are considered during obstacle crossing, so that a real situation of the step-type obstacle can be considered comprehensively. Therefore, more refined and intelligent obstacle crossing can be performed on the step-type obstacle, thereby avoiding obstacle crossing abnormality. For example, a problem such as falling or being suspended occurs after obstacle crossing.

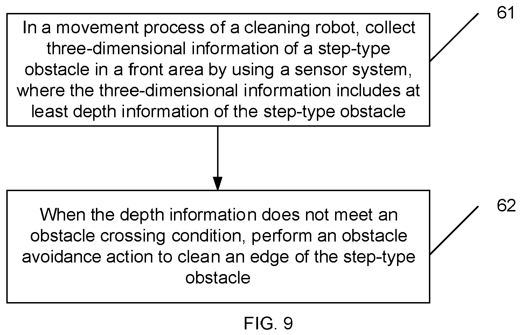

Reference is made to FIG. 9. An embodiment of this specification further provides another movement control method for a cleaning robot. The method includes the following steps.

Step 61: In a movement process of the cleaning robot, collect three-dimensional information of a step-type obstacle in a front area by using a sensor system, where the three-dimensional information includes at least depth information of the step-type obstacle.

Step 62: When the depth information does not meet an obstacle crossing condition, perform an obstacle avoidance action to clean an edge of the step-type obstacle.

In an example embodiment, the three-dimensional information may include the depth information of the step-type obstacle. When the depth information does not meet the obstacle crossing condition, the obstacle avoidance action is performed to clean the edge of the step-type obstacle. In this way, the depth information of the step-type obstacle is considered, so that an abnormal problem such as falling, being suspended, or being stuck after obstacle crossing because the step-type obstacle is excessively short in a vertical depth direction can be avoided. When the obstacle crossing condition is not met, edge cleaning is performed, so that a missed cleaning range can be reduced, a cleaning coverage rate can be increased, and a cleaning effect can be improved.

In an example embodiment, the three-dimensional information further includes at least one of the following: height information of the step-type obstacle, width information of the step-type obstacle, and slope information of the step-type obstacle. In this case, when the depth information meets the obstacle crossing condition, and at least one of the height information, the width information, and the slope information does not meet the obstacle crossing condition, the obstacle avoidance action may be performed. In this way, at least one of the height information, the width information, and the slope information of the step-type obstacle is considered. A problem such as falling, being suspended, or being stuck after obstacle crossing can be avoided. Specifically, for example, an abnormal problem such as falling, being suspended, or being stuck after obstacle crossing because the step-type obstacle is excessively narrow in a width direction can be avoided. The following case can also be avoided: Because an included angle between a second surface of the step-type obstacle and a horizontal surface is excessively large, the second surface is excessively steep, and consequently the cleaning robot slips after obstacle crossing. When the obstacle crossing condition is not met, edge cleaning is performed, so that a missed cleaning range can be reduced, a cleaning coverage rate can be increased, and a cleaning effect can be improved.

In an example embodiment, the cleaning robot may be controlled to decelerate to move to the edge of the step-type obstacle, and then a movement direction of the cleaning robot may be adjusted to clean the edge of the step-type obstacle.

According to the movement control method for a cleaning robot, the cleaning robot is provided with the sensor system capable of obtaining the three-dimensional information of the obstacle. In the movement process of the cleaning robot, the three-dimensional information of the step-type obstacle in the front area may be collected by using the sensor system, where the three-dimensional information includes at least the depth information of the step-type obstacle; and when the depth information does not meet the obstacle crossing condition, the obstacle avoidance action may be performed to clean the edge of the step-type obstacle. In this way, the depth information of the step-type obstacle is considered during obstacle crossing, so that refined and intelligent obstacle avoidance can be performed on the step-type obstacle. This reduces a problem of scraping between the cleaning robot and the step-type obstacle, and effectively prolongs a service life of the robot.

An embodiment of this specification further provides a cleaning robot, including a body and a sensor system disposed on the body. The sensor system is configured to: in a movement process of the cleaning robot, collect three-dimensional information of a step-type obstacle in a front area, where the three-dimensional information includes at least height information and depth information of the step-type obstacle. At least when both the height information and the depth information meet an obstacle crossing condition, the cleaning robot may perform an obstacle crossing action to cross the step-type obstacle.

An embodiment of this specification further provides another cleaning robot, including a body and a sensor system disposed on the body. The sensor system is configured to: in a movement process of the cleaning robot, collect three-dimensional information of a step-type obstacle in a front area, where the three-dimensional information includes at least depth information of the step-type obstacle. When the depth information does not meet an obstacle crossing condition, the cleaning robot performs an obstacle avoidance action to clean an edge of the step-type obstacle.

An embodiment of this specification further provides a computer-readable storage medium, where the computer-readable storage medium stores a computer program, and when the computer program is executed by a processor, the foregoing movement control method is implemented.

An embodiment of this specification further provides a computer program product, where the computer program product includes a computer program, and when the computer program is executed by a processor, the foregoing movement control method is implemented.

A person skilled in the art can understand that this specification may be provided as a method, a system, or a computer program product. Therefore, this specification may use a form of hardware only embodiments, software only embodiments, or embodiments with a combination of software and hardware. In addition, this specification may use a form of a computer program product that is implemented on one or more computer-usable storage media (including but not limited to a disk memory, a CD-ROM, an optical memory, and the like) that include computer-usable program code.

This specification is described with reference to the flowcharts and/or block diagrams of the method, the device (system), and the computer program product according to the embodiments of this specification. It should be understood that computer program instructions may be used to implement each process and/or each block in the flowcharts and/or the block diagrams and a combination of a process and/or a block in the flowcharts and/or the block diagrams. The computer may be a personal computer, a laptop computer, a cellular phone, a camera phone, a smart phone, a personal digital assistant, a media player, a navigation device, an email device, a game console, a tablet computer, a wearable device, or a combination of any of these devices.

Functional units in the embodiments of this specification may be integrated into one processing unit, or each functional unit may exist alone physically, or two or more functional units may be integrated into one processing unit.

## Claims

1. A movement control method for a cleaning robot, wherein the cleaning robot is provided with a sensor system capable of obtaining three-dimensional information of an obstacle, and the method comprises:
in a movement process of the cleaning robot, collecting three-dimensional information of a step-type obstacle in a front area by using the sensor system, wherein the three-dimensional information comprises height information, depth information, width information, and slope information of the step-type obstacle, wherein
the step-type obstacle comprises a first surface and a second surface, the height information comprises height information of the first surface, the depth information comprises vertical depth information of a projection of the second surface on a horizontal surface, the width information comprises width information of the second surface, and the slope information comprises included angle information between the second surface and the horizontal surface; and
when the height information is less than or equal to a first threshold, the vertical depth information is greater than or equal to a second threshold, the width information is greater than or equal to a third threshold, and the slope information is less than or equal to a fourth threshold, performing an obstacle crossing action to cross the step-type obstacle.

2. The method according to claim 1, wherein the first threshold is 5 cm to 10 cm, the second threshold is 1.1 times to 1.5 times a maximum diameter of the cleaning robot, the third threshold is 1.1 times to 1.5 times the maximum diameter of the cleaning robot, and the fourth threshold is 20° to 40°.

3. The method according to claim 1, wherein the first threshold is 5 cm to 10 cm, and the second threshold is 1.1 times to 1.5 times a maximum diameter of the cleaning robot.

4. The method according to claim 1, wherein the three-dimensional information further comprises at least one of the following: width information of the step-type obstacle and slope information of the step-type obstacle, and the step of performing an obstacle crossing action comprises:
when the height information, the depth information, and the width information meet the obstacle crossing condition, performing the obstacle crossing action; or
when the height information, the depth information, and the slope information meet the obstacle crossing condition, performing the obstacle crossing action; or
when the height information, the depth information, the width information, and the slope information meet the obstacle crossing condition, performing the obstacle crossing action.

5. The method according to any one of claims 1 to 4, wherein the sensor system comprises at least one of the following: a monocular sensor, a binocular sensor, a line laser sensor, a surface laser sensor, an LDS sensor, and a Dtof sensor.

6. The method according to any one of claims 1 to 4, wherein the step of performing an obstacle crossing action comprises:
when the height information is less than or equal to a first threshold, adjusting a movement direction of the cleaning robot, so that an included angle between a detection direction of the sensor system and a first surface of the step-type obstacle meets a preset included angle condition; and
when the depth information is greater than or equal to a second threshold if the preset included angle condition is met, performing the obstacle crossing action.

7. The method according to any one of claims 1 to 4, wherein the step of performing an obstacle crossing action comprises:
starting an obstacle crossing component to perform the obstacle crossing action by using the obstacle crossing component; or
controlling the cleaning robot to accelerate to cross the step-type obstacle.

8. The method according to claim 7, wherein the step of starting an obstacle crossing component comprises:
when the height information is greater than a specified height and is less than or equal to a first threshold, controlling the cleaning robot to stop when moving to a specified position, wherein a distance between the specified position and the step-type obstacle is less than or equal to a fifth threshold; and
starting the obstacle crossing component to perform the obstacle crossing action by using the obstacle crossing component.

9. The method according to claim 7, wherein the step of controlling the cleaning robot to accelerate comprises:
when the height information is less than or equal to a specified height, if a distance between the cleaning robot and the step-type obstacle is less than a sixth threshold, controlling the cleaning robot to retreat until the distance between the cleaning robot and the step-type obstacle is greater than or equal to the sixth threshold, wherein the specified height is less than a first threshold; and
controlling the cleaning robot to accelerate to cross the step-type obstacle.

10. The method according to any one of claims 1 to 4, wherein the method further comprises:
when the height information and/or the depth information do or does not meet the obstacle crossing condition, performing an obstacle avoidance action, and cleaning an edge of the step-type obstacle.

11. The method according to claim 10, wherein the three-dimensional information further comprises at least one of the following: the width information of the step-type obstacle and the slope information of the step-type obstacle, and the method further comprises:
when the height information and the depth information meet the obstacle crossing condition, and at least one of the width information and the slope information does not meet the obstacle crossing condition, performing the obstacle avoidance action to clean the edge of the step-type obstacle.

12. The method according to claim 10, wherein the step of performing an obstacle avoidance action comprises:
controlling the cleaning robot to decelerate to move to the edge of the step-type obstacle; and
adjusting a movement direction of the cleaning robot to clean the edge of the step-type obstacle.

## Patentansprüche

1. Verfahren zum Steuern der Bewegung eines Reinigungsroboters, wobei der Reinigungsroboter mit einem Sensorsystem versehen ist, das in der Lage ist, dreidimensionale Informationen eines Hindernisses zu erfassen, und das Verfahren umfasst:
in einem Bewegungsprozess des Reinigungsroboters das Erfassen dreidimensionaler Informationen eines stufenförmigen Hindernisses in einem vorderen Bereich unter Verwendung des Sensorsystems, wobei die dreidimensionale Information Höheninformation, Tiefeninformation, Breiteninformation und Neigungsinformation des stufenförmigen Hindernisses umfasst, wobei
das stufenförmige Hindernis eine erste Fläche und eine zweite Fläche umfasst, die Höheninformation die Höheninformation der ersten Fläche umfasst, die Tiefeninformation die vertikale Tiefeninformation einer Projektion der zweiten Fläche auf eine horizontale Fläche umfasst, die Breiteninformation die Breiteninformation der zweiten Fläche umfasst und die Neigungsinformation die eingeschlossene Winkelinformation zwischen der zweiten Fläche und der horizontalen Fläche umfasst; und
wenn die Höheninformation kleiner oder gleich einem ersten Schwellenwert ist, die vertikale Tiefeninformation größer oder gleich einem zweiten Schwellenwert ist, die Breiteninformation größer oder gleich einem dritten Schwellenwert ist und die Neigungsinformation kleiner oder gleich einem vierten Schwellenwert ist, Durchführen einer Hindernisüberquerungsaktion, um das stufenförmige Hindernis zu überqueren.

2. Verfahren nach Anspruch 1, wobei der erste Schwellenwert 5 cm bis 10 cm beträgt, der zweite Schwellenwert das 1,1-fache bis 1,5-fache eines maximalen Durchmessers des Reinigungsroboters beträgt, der dritte Schwellenwert das 1,1-fache bis 1,5-fache des maximalen Durchmessers des Reinigungsroboters beträgt und der vierte Schwellenwert 20° bis 40° beträgt.

3. Verfahren nach Anspruch 1, wobei der erste Schwellenwert 5 cm bis 10 cm beträgt und der zweite Schwellenwert das 1,1-fache bis 1,5-fache eines maximalen Durchmessers des Reinigungsroboters beträgt.

4. Verfahren nach Anspruch 1, wobei die dreidimensionale Information weiterhin mindestens eine der folgenden Informationen umfasst: Breiteninformation des stufenförmigen Hindernisses und Neigungsinformation des stufenförmigen Hindernisses, und der Schritt des Durchführens einer Hindernisüberquerungsaktion umfasst:
wenn die Höheninformation, die Tiefeninformation und die Breiteninformation die Hindernisüberquerungsbedingung erfüllen, Durchführen der Hindernisüberquerungsaktion; oder
wenn die Höheninformation, die Tiefeninformation und die Neigungsinformation die Hindernisüberquerungsbedingung erfüllen, Durchführen der Hindernisüberquerungsaktion; oder
wenn die Höheninformation, die Tiefeninformation, die Breiteninformation und die Neigungsinformation die Hindernisüberquerungsbedingung erfüllen, Durchführen der Hindernisüberquerungsaktion.

5. Verfahren nach einem der Ansprüche 1 bis 4, wobei das Sensorsystem mindestens eines der Folgenden umfasst: einen monokularen Sensor, einen binokularen Sensor, einen Linienlasersensor, einen Flächenlasersensor, einen LDS-Sensor und einen DToF-Sensor.

6. Verfahren nach einem der Ansprüche 1 bis 4, wobei der Schritt des Durchführens einer Hindernisüberquerungsaktion umfasst:
wenn die Höheninformation kleiner oder gleich einem ersten Schwellenwert ist, Einstellen einer Bewegungsrichtung des Reinigungsroboters, so dass ein eingeschlossener Winkel zwischen einer Erfassungsrichtung des Sensorsystems und einer ersten Fläche des stufenförmigen Hindernisses eine voreingestellte Winkelbedingung erfüllt; und
wenn die Tiefeninformation größer oder gleich einem zweiten Schwellenwert ist, sofern die voreingestellte Winkelbedingung erfüllt ist, Durchführen der Hindernisüberquerungsaktion.

7. Verfahren nach einem der Ansprüche 1 bis 4, wobei der Schritt des Durchführens einer Hindernisüberquerungsaktion umfasst:
Starten einer Hindernisüberquerungskomponente, um die Hindernisüberquerungsaktion unter Verwendung der Hindernisüberquerungskomponente durchzuführen; oder
Steuern des Reinigungsroboters zur Beschleunigung, um das stufenförmige Hindernis zu überqueren.

8. Verfahren nach Anspruch 7, wobei der Schritt des Startens einer Hindernisüberquerungskomponente umfasst:
wenn die Höheninformation größer als eine angegebene Höhe ist und kleiner oder gleich einem ersten Schwellenwert ist, Steuern des Reinigungsroboters zum Anhalten, wenn er sich zu einer bestimmten Position bewegt, wobei ein Abstand zwischen der bestimmten Position und dem stufenförmigen Hindernis kleiner oder gleich einem fünften Schwellenwert ist;
Starten der Hindernisüberquerungskomponente, um die Hindernisüberquerungsaktion unter Verwendung der Hindernisüberquerungskomponente durchzuführen.

9. Verfahren nach Anspruch 7, wobei der Schritt des Steuerns des Reinigungsroboters zur Beschleunigung umfasst:
wenn die Höheninformation kleiner oder gleich einer angegebenen Höhe ist, falls ein Abstand zwischen dem Reinigungsroboter und dem stufenförmigen Hindernis kleiner als ein sechster Schwellenwert ist, Steuern des Reinigungsroboters zum Zurückweichen, bis der Abstand zwischen dem Reinigungsroboter und dem stufenförmigen Hindernis größer oder gleich dem sechsten Schwellenwert ist, wobei die angegebene Höhe kleiner als ein erster Schwellenwert ist; und
Steuern des Reinigungsroboters zur Beschleunigung, um das stufenförmige Hindernis zu überqueren.

10. Verfahren nach einem der Ansprüche 1 bis 4, wobei das Verfahren ferner umfasst:
wenn die Höheninformation und/oder die Tiefeninformation die Hindernisüberquerungsbedingung erfüllen oder nicht erfüllen, Durchführen einer Hindernisvermeidungsaktion und Reinigen einer Kante des stufenförmigen Hindernisses.

11. Verfahren nach Anspruch 10, wobei die dreidimensionale Information weiterhin mindestens eine der folgenden Informationen umfasst: die Breiteninformation des stufenförmigen Hindernisses und die Neigungsinformation des stufenförmigen Hindernisses, und das Verfahren weiterhin umfasst:
wenn die Höheninformation und die Tiefeninformation die Hindernisüberquerungsbedingung erfüllen und mindestens eine der Breiteninformation und der Neigungsinformation die Hindernisüberquerungsbedingung nicht erfüllt, Durchführen der Hindernisvermeidungsaktion, um die Kante des stufenförmigen Hindernisses zu reinigen.

12. Verfahren nach Anspruch 10, wobei der Schritt des Durchführens einer Hindernisvermeidungsaktion umfasst:
Steuern des Reinigungsroboters, um sich verlangsamt zur Kante des stufenförmigen Hindernisses zu bewegen; und
Einstellen einer Bewegungsrichtung des Reinigungsroboters, um die Kante des stufenförmigen Hindernisses zu reinigen.

## Revendications

1. Une méthode de contrôle de mouvement pour un robot de nettoyage, le robot de nettoyage étant pourvu d'un système de capteurs capable d'obtenir des informations tridimensionnelles d'un obstacle, et la méthode comprend :
lors du processus de mouvement du robot de nettoyage, collecter des informations tridimensionnelles d'un obstacle de type marche dans une zone avant au moyen du système de capteurs, les informations tridimensionnelles comprenant des informations de hauteur, des informations de profondeur, des informations de largeur et des informations de pente de l'obstacle de type marche, dans lequel
l'obstacle de type marche comprend une première surface et une seconde surface, les informations de hauteur comprennent des informations de hauteur de la première surface, les informations de profondeur comprennent des informations de profondeur verticale d'une projection de la seconde surface sur une surface horizontale, les informations de largeur comprennent des informations de largeur de la seconde surface, et les informations de pente comprennent des informations d'angle inclus entre la seconde surface et la surface horizontale ; et
lorsque les informations de hauteur sont inférieures ou égales à un premier seuil, les informations de profondeur verticale sont supérieures ou égales à un deuxième seuil, les informations de largeur sont supérieures ou égales à un troisième seuil, et les informations de pente sont inférieures ou égales à un quatrième seuil, exécuter une action de franchissement d'obstacle pour franchir l'obstacle de type marche.

2. La méthode selon la revendication 1, dans laquelle le premier seuil est de 5 cm à 10 cm, le deuxième seuil est de 1,1 fois à 1,5 fois le diamètre maximal du robot de nettoyage, le troisième seuil est de 1,1 fois à 1,5 fois le diamètre maximal du robot de nettoyage, et le quatrième seuil est de 20° à 40°.

3. La méthode selon la revendication 1, dans laquelle le premier seuil est de 5 cm à 10 cm, et le deuxième seuil est de 1,1 fois à 1,5 fois le diamètre maximal du robot de nettoyage.

4. La méthode selon la revendication 1, dans laquelle les informations tridimensionnelles comprennent en outre au moins l'une des informations suivantes : des informations de largeur de l'obstacle de type marche et des informations de pente de l'obstacle de type marche, et l'étape d'exécution d'une action de franchissement d'obstacle comprend :
lorsque les informations de hauteur, les informations de profondeur et les informations de largeur satisfont la condition de franchissement d'obstacle, exécuter l'action de franchissement d'obstacle ; ou
lorsque les informations de hauteur, les informations de profondeur et les informations de pente satisfont la condition de franchissement d'obstacle, exécuter l'action de franchissement d'obstacle ; ou
lorsque les informations de hauteur, les informations de profondeur, les informations de largeur et les informations de pente satisfont la condition de franchissement d'obstacle, exécuter l'action de franchissement d'obstacle.

5. La méthode selon l'une quelconque des revendications 1 à 4, dans laquelle le système de capteurs comprend au moins l'un des éléments suivants : un capteur monoculaire, un capteur binoculaire, un capteur laser linéaire, un capteur laser de surface, un capteur LDS et un capteur Dtof.

6. La méthode selon l'une quelconque des revendications 1 à 4, dans laquelle l'étape d'exécution d'une action de franchissement d'obstacle comprend :
lorsque les informations de hauteur sont inférieures ou égales à un premier seuil, ajuster la direction de mouvement du robot de nettoyage, de sorte qu'un angle inclus entre la direction de détection du système de capteurs et la première surface de l'obstacle de type marche satisfasse une condition d'angle inclus prédéfinie ; et
lorsque les informations de profondeur sont supérieures ou égales à un deuxième seuil si la condition d'angle inclus prédéfinie est satisfaite, exécuter l'action de franchissement d'obstacle.

7. La méthode selon l'une quelconque des revendications 1 à 4, dans laquelle l'étape d'exécution d'une action de franchissement d'obstacle comprend :
démarrer un composant de franchissement d'obstacle pour exécuter l'action de franchissement d'obstacle au moyen du composant de franchissement d'obstacle ; ou
commander le robot de nettoyage à accélérer pour franchir l'obstacle de type marche.

8. La méthode selon la revendication 7, dans laquelle l'étape de démarrage d'un composant de franchissement d'obstacle comprend :
lorsque les informations de hauteur sont supérieures à une hauteur spécifiée et inférieures ou égales à un premier seuil, commander le robot de nettoyage à s'arrêter lorsqu'il se déplace vers une position spécifiée, dans laquelle une distance entre la position spécifiée et l'obstacle de type marche est inférieure ou égale à un cinquième seuil ; et
démarrer le composant de franchissement d'obstacle pour exécuter l'action de franchissement d'obstacle au moyen du composant de franchissement d'obstacle.

9. La méthode selon la revendication 7, dans laquelle l'étape de commande du robot de nettoyage à accélérer comprend :
lorsque les informations de hauteur sont inférieures ou égales à une hauteur spécifiée, si une distance
entre le robot de nettoyage et l'obstacle de type marche est inférieure à un sixième seuil, commander le robot de nettoyage à reculer jusqu'à ce que la distance entre le robot de nettoyage et l'obstacle de type marche soit supérieure ou égale au sixième seuil, où la hauteur spécifiée est inférieure au premier seuil ; et
commander le robot de nettoyage à accélérer pour franchir l'obstacle de type marche.

10. La méthode selon l'une quelconque des revendications 1 à 4, dans laquelle la méthode comprend en outre :
lorsque les informations de hauteur et/ou les informations de profondeur ne satisfont pas la condition de franchissement d'obstacle, exécuter une action d'évitement d'obstacle et nettoyer le bord de l'obstacle de type marche.

11. La méthode selon la revendication 10, dans laquelle les informations tridimensionnelles comprennent en outre au moins l'une des suivantes : des informations de largeur de l'obstacle de type marche et des informations de pente de l'obstacle de type marche, et la méthode comprend en outre :
lorsque les informations de hauteur et les informations de profondeur satisfont la condition de franchissement d'obstacle, et qu'au moins l'une des informations de largeur et des informations de pente ne satisfont pas la condition de franchissement d'obstacle, exécuter l'action d'évitement d'obstacle pour nettoyer le bord de l'obstacle de type marche.

12. La méthode selon la revendication 10, dans laquelle l'étape d'exécution d'une action d'évitement d'obstacle comprend :
commander le robot de nettoyage à décélérer pour se déplacer vers le bord de l'obstacle de type marche ; et
ajuster la direction de mouvement du robot de nettoyage pour nettoyer le bord de l'obstacle de type marche.
